(19) Europäisches Patentamt / European Patent Office / Office européen des brevets

(11) EP 4 316 772 A1

(12) EUROPEAN PATENT APPLICATION
published in accordance with Art. 153(4) EPC

(43) Date of publication:
07.02.2024 Bulletin 2024/06

(21) Application number: 22781104.9

(22) Date of filing: 30.03.2022

(51) International Patent Classification (IPC):
B29C 45/14 (2006.01)        B32B 27/18 (2006.01)
B32B 27/20 (2006.01)        B32B 7/022 (2019.01)
B32B 7/06 (2019.01)

(52) Cooperative Patent Classification (CPC):
B29C 45/14; B32B 7/022; B32B 7/06; B32B 27/18;
B32B 27/20

(86) International application number:
PCT/JP2022/016043

(87) International publication number:
WO 2022/210894 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.03.2021 JP 2021060669

(71) Applicant: Dai Nippon Printing Co., Ltd.
Tokyo 162-8001 (JP)

(72) Inventors:
• KANEKO, Masakazu
  Tokyo 162-8001 (JP)
• KADONO, Hirokazu
  Tokyo 162-8001 (JP)
• SOTODA, Teppei
  Tokyo 162-8001 (JP)

(74) Representative: Müller-Boré & Partner
Patentanwälte PartG mbB
Friedenheimer Brücke 21
80639 München (DE)

(54) **TRANSFER FILM, HARDCOAT FILM, HARDCOAT MOLDED ARTICLE AND METHOD FOR PRODUCING SAME**

(57) A transfer film includes a first substrate and a transfer layer, in which the transfer layer includes a hard coat layer and an adhesive layer in that order from the first substrate side, the hard coat layer has an elongation at 25°C of 10% or more and 60% or less, and in which letting a thickness of the hard coat layer expressed in units of $\mu$m be t, and letting the elongation of the hard coat layer expressed in units of % be E1, the value of t $\times$ E1/100 is 1.40 or more.

FIG. 1

**Description**

Technical Field

The present disclosure relates to a transfer film, a hard coat film, a hard-coated formed article, and a method for manufacturing a hard-coated formed article.

Background Art

In recent years, resin molded articles composed of transparent resin materials have been increasingly used as substitutes for inorganic glass materials. However, resin molded articles are typically inferior in abrasion resistance to inorganic glass materials. To improve the abrasion resistance of resin molded articles, hard coat layers are disposed on surfaces of resin molded articles.

Hard coat layers are usually formed by coating or transfer. For example, a transfer sheet including a substrate, a hard coat layer, and an adhesive layer is known (for example, see Patent Literature 1).

Citation List

Patent Literature

PTL 1: Japanese Patent No. 5601189

Summary of Invention

Technical Problem

Conventional hard coat layers impart abrasion resistance to resin molded articles but do not have sufficient weather resistance properties. For example, hard coat layers disposed on window materials for automobiles are exposed to environments, such as direct sunlight, wind, and rain. However, conventional hard coat layers are disadvantageously prone to cracking when exposed to such an environment.

It is an object of the present disclosure to provide a transfer film that can impart excellent weather resistance and abrasion resistance to a formed article. It is an object of the present disclosure to provide a hard coat film that can impart excellent weather resistance and abrasion resistance to a formed article. It is an object of the present disclosure to provide a hard-coated formed article having excellent weather resistance and abrasion resistance, and a method for producing the same.

Solution to Problem

A transfer film of the present disclosure includes a first substrate and a transfer layer, in which the transfer layer includes a hard coat layer and an adhesive layer in that order from the first substrate side, the hard coat layer has an elongation at 25°C of 10% or more and 60% or less, and in which letting a thickness of the hard coat layer expressed in units of $\mu$m be t, and letting the elongation of the hard coat layer expressed in units of % be E1, the value of $t \times E1/100$ is 1.40 or more.

A hard coat film of the present disclosure includes a second substrate and a hard coat layer, in which the hard coat layer has an elongation at 25°C of 10% or more and 60% or less, and in which letting a thickness of the hard coat layer expressed in units of $\mu$m be t, and letting the elongation of the hard coat layer expressed in units of % be E1, the value of $t \times E1/100$ is 1.40 or more.

A hard-coated formed article of the present disclosure includes a formed article and a surface protective film disposed over at least a partial region of a surface of the formed article, in which the surface protective film is the above-described transfer layer of the above-described transfer film or the above-described hard coat film, and the hard coat layer is included in a surface layer of the hard-coated formed article.

A method of the present disclosure for manufacturing a hard-coated formed article includes the steps of disposing the above-described transfer film on a formed article in such a manner that the adhesive layer in the transfer film is in contact with a surface of the formed article, and peeling the first substrate in the transfer film. A method of the present disclosure for manufacturing a hard-coated formed article includes a step of disposing the above-described hard coat film on a formed article.

Advantageous Effects of Invention

According to the present disclosure, it is possible to provide the transfer film that can impart excellent weather resistance and abrasion resistance to the formed article. According to the present disclosure, it is possible to provide a hard coat film that can impart excellent weather resistance and abrasion resistance to a formed article. According to the present disclosure, it is possible to provide the hard-coated formed article having excellent weather resistance and abrasion resistance, and the method for manufacturing the same.

Brief Description of Drawings

[Fig. 1] Fig. 1 is a schematic cross-sectional view of a transfer film according to an embodiment of the present disclosure.

[Fig. 2] Fig. 2 is a schematic cross-sectional view of a transfer film according to an embodiment of the present disclosure.

[Fig. 3] Fig. 3 is a schematic cross-sectional view of a hard coat film according to an embodiment of the present disclosure.

[Fig. 4] Fig. 4 is a schematic cross-sectional view of a hard coat film according to an embodiment of the present disclosure.

[Fig. 5] Fig. 5 is a schematic cross-sectional view of a hard-coated formed article according to an embodiment of the present disclosure.

[Fig. 6] Fig. 6 is a schematic cross-sectional view of a hard-coated formed article according to an embodiment of the present disclosure.

[Fig. 7] Fig. 7 is a graph in which the number of clear cycles (cracks) in the weather resistance test is plotted against the parameter of the thickness of a hard coat layer $\times$ 25°C elongation in transfer films prepared in Examples and Comparative examples.

Description of Embodiments

Embodiments of the present disclosure will be described in detail below. The present disclosure can be carried out in many different aspects and is not to be construed as being limited to the description of embodiments illustrated below. In the drawings, the width, thickness, shape, and the like of each member may be schematically illustrated as compared with the embodiment in order to make the description clearer. However, the drawings are merely examples and do not limit the interpretation of the present disclosure. In the present specification and the drawings, like reference numerals denote like elements as those already described with reference to the previous drawings, and detailed description thereof may be appropriately omitted.
In the following description, components (for example, resin materials, curable components, weather resistance improvers, particles, additives, and organic solvents) may be used alone or in combination of two or more.

[Transfer Film]

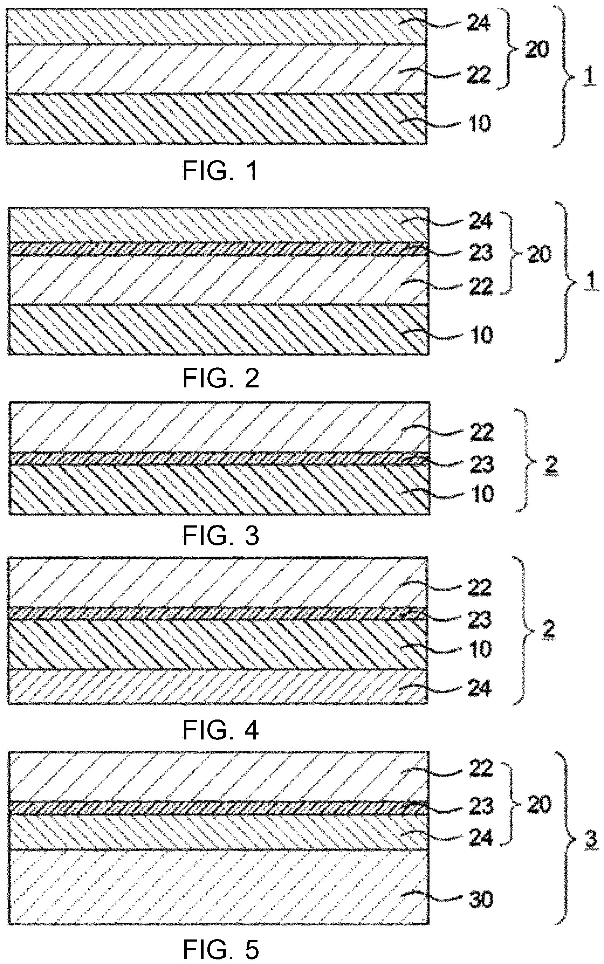

The transfer film of the present disclosure includes a first substrate and a transfer layer. The transfer layer is releasably disposed on the first substrate. The transfer layer includes a hard coat layer and an adhesive layer in that order from the first substrate side in the thickness direction.
The configuration of the transfer film according to an embodiment of the present disclosure will be described below with reference to the drawings as appropriate. As illustrated in Fig. 1, a transfer film 1 includes a first substrate 10 and a transfer layer 20 releasably disposed on the first substrate 10. The transfer layer 20 includes a hard coat layer 22 and an adhesive layer 24 in that order from the first substrate 10 side in the thickness direction. As illustrated in Fig. 2, the transfer layer 20 may include a primer layer 23 between the hard coat layer 22 and the adhesive layer 24. That is, the hard coat layer 22, the primer layer 23, and the adhesive layer 24 are arranged in that order in the thickness direction of the transfer film 1.

In the transfer film of the present disclosure, the transfer layer may further include another layer different from the hard coat layer, the primer layer, and the adhesive layer. As another layer, a known layer can be appropriately selected and used. An example of another layer is a decorative layer.

The transfer film of the present disclosure can be used in a variety of modes of use, but is particularly preferably used in a thermal transfer method or an in-mold molding method. In other words, the transfer film is preferably used for the thermal transfer method or the in-mold molding method.

In the transfer film of the present disclosure, the transfer layer is transferred as a surface protective film onto a formed article that is a transfer-receiving article. The use of the transfer film of the present disclosure can impart, for example, excellent weather resistance, abrasion resistance, and chemical resistance to the formed article. The transfer film of the present disclosure can be suitably used for a formed article that is exposed to direct sunlight or wind and rain and that is used in applications that require the transfer film to have resistance to severe weather.

The use of the transfer film of the present disclosure can easily form a hard coat layer on a surface of a formed article in a transfer process, which does not release an organic solvent and is an environmentally friendly process, and can impart, for example, weather resistance, abrasion resistance, and chemical resistance to the formed article.

In one embodiment, the transfer layer preferably has a visible light transmittance of 70% or more, more preferably 80% or more, still more preferably 85% or more. In this case, the transfer film of the present disclosure can be suitably used for applications requiring high visibility, such as plastic glazing. The visible light transmittance is a total luminous transmittance in the visible light wavelength range with respect to illuminant C or illuminant D65. The total luminous transmittance is measured according to JIS K7361-1.

<First Substrate>

An example of the first substrate is, as a supporting substrate that can support each layer, such as the hard coat layer, a resin layer having appropriate physical properties (for example, flexibility and rigidity) according to the purpose of use.

As the first substrate, for example, a film composed of a resin material (hereinafter, referred to as a "resin film") can be used. Examples of the resin material include polyesters, polyolefins, polystyrene, vinyl resins, (meth)acrylic resins, amide resins, imide resins, and polycarbonates. In the present disclosure, the term "(meth)acrylic" includes both "acrylic" and "methacrylic", and the term "(meth)acrylate" includes both "acrylate" and "methacrylate".

Examples of polyesters include poly(ethylene terephthalate) (PET), poly(butylene terephthalate) (PBT), poly(ethylene naphthalate) (PEN), and poly(ethylene terephthalate-isophthalate) copolymers. Among these, PET and PBT are preferred, and PET is particularly preferred, from the viewpoints of being less prone to thermal shrinkage and shrinkage due to irradiation with actinic energy rays during the production of the transfer film, and having high releasability from the transfer layer.

Examples of polyolefins include polyethylene, polypropylene, polybutene, ethylene-propylene copolymers, and ethylene-propylene-butene copolymers. Among these, polypropylene is preferred.

The resin film may be a stretched film or an unstretched film. The stretched film is preferred. When the first substrate is a stretched film, it is possible to suppress the thermal shrinkage of the substrate due to heat treatment and the shrinkage of the substrate due to cross-linking treatment by irradiation with actinic energy rays during the production of the transfer film, thereby enhancing the shape and dimensional stability of the transfer film.

The stretched film may be a uniaxially stretched film or a biaxially stretched film. The biaxially stretched film is preferred from the viewpoint of being less prone to thermal shrinkage and shrinkage caused by irradiation with actinic energy rays during the production of the transfer film.

The first substrate may have a single-layer structure or a multilayer structure. The first substrate may be, for example, a single-layer substrate of a resin film or a laminate of resin films. The laminate of resin films can be produced by, for example, a dry lamination method, a wet lamination method, or an extrusion method.

If necessary, the surface of the first substrate adjacent to the transfer layer may be subjected to a known release treatment, or a release layer of, for example, a silicone resin may be disposed. This can, for example, improve the releasability between the first substrate and the transfer layer when the transfer layer is transferred to a surface of the formed article.

The first substrate preferably has a thickness of 5 $\mu$m or more, more preferably 10 $\mu$m or more, and preferably 200 $\mu$m or less, more preferably 100 $\mu$m or less. When the first substrate has a multilayer structure, the thickness of the entire multilayer structure is preferably within the above range.

<Hard Coat Layer>

In the transfer film of the present disclosure, the transfer layer includes a hard coat layer. The hard coat layer is a layer configured to serve as a surface layer of a hard-coated formed article obtained after the hard coat layer is transferred to a formed article, serving as a transfer-receiving article, with an adhesive layer provided therebetween. In the present disclosure, the hard coat layer is a layer disposed in order to impart abrasion resistance to a target formed article.

The following is a description of the physical properties satisfied by the hard coat layer.

The elongation of the hard coat layer at 25°C (25°C elongation) is 10% or more and 60% or less, preferably 15% or more, more preferably 30% or more, still more preferably 35% or more, and may be 52% or less, 50% or less, 49% or less, or 48% or less. The 25°C elongation within the above range can be obtained by appropriately adjusting the composition of a composition to be formed into the hard coat layer as described below.

When the 25°C elongation of the hard coat layer is 10% or more, for example, cracking in the hard coat layer can be satisfactorily inhibited to improve the weather resistance. This is presumably because the fatigue caused by the expansion and contraction of the hard coat layer itself due to temperature changes is mitigated. A primer layer may be disposed between the hard coat layer and the adhesive layer in the transfer layer. The primer layer usually tends to have a higher coefficient of linear expansion, for example, in the range of 40°C or higher and 70°C or lower than the hard coat layer and the adhesive layer. For this reason, in the conventional hard coat film, the hard coat layer cannot follow the dimensional change caused by the swelling and shrinkage movements of the primer layer due to temperature changes, and cracking may occur in the hard coat layer. In the transfer film of the present disclosure, the hard coat layer has high elongation and thus can follow the dimensional change of the primer layer due to temperature changes. Thereby cracking can be satisfactorily inhibited.

When the 25°C elongation of the hard coat layer is 60% or less, for example, abrasion resistance and chemical resistance can be improved. The hard coat layer in the present disclosure is excellent in abrasion resistance, chemical resistance, and is excellent in elongation properties.

The elongation of the hard coat layer is measured as follows: The transfer layer is transferred from the transfer film onto a film member having a higher elongation than the hard coat layer to prepare a test specimen in which the film member and the transfer layer are in close contact with each other. This test specimen has a multilayer structure of, for example, film member/adhesive layer/optionally primer layer/hard coat layer.

The test specimen is subjected to a tensile test. Specifically, the test specimen is subjected to the tensile test with a tensile tester under conditions of an initial chuck-to-chuck distance of 5 cm and a tension speed of 50 mm/min. The chuck-to-chuck distance when cracking occurs in the hard coat layer is measured, and the elongation is determined according to the following formula.

$$\text{Elongation (\%)} = \{(\text{chuck-to-chuck distance when cracking occurs in hard coat layer in tensile test}) - (\text{initial chuck-to-chuck distance})\}/(\text{initial chuck-to-chuck distance}) \times 100$$

In the transfer film of the present disclosure, letting the thickness of the hard coat layer expressed in units of $\mu$m be t, and letting the 25°C elongation of the hard coat layer expressed in units of % be E1, the value of t $\times$ E1/100 is 1.40 or more. The value of t $\times$ E1/100 is preferably 1.50 or more, more preferably 1.60 or more or 1.70 or more, still more preferably 1.75 or more, particularly preferably 1.80 or more. The upper limit of the value given by t $\times$ E1/100 is, but not particularly limited to, for example, 5.00, and 3.50 in one embodiment.

In the present disclosure, the thickness of each layer can be measured using a scanning electron microscope (SEM) photograph of the cross section of each layer. The thickness of each layer is the average value of the thicknesses at five freely-selected points in the cross-sectional SEM image.

The disclosers have found that, in addition to the 25°C elongation, E1, of the hard coat layer, thickness $\times$ 25°C elongation (t $\times$ E1/100), which also takes into account the effect of the thickness of the hard coat layer, is suitable as an index of weather resistance of the hard coat layer. In other words, the disclosers have found that the hard coat layer in which t $\times$ E1/100 is equal to or more than a specific value exhibits excellent weather resistance.

This is considered to be due to the following reasons. In a weathering test, for example, exposure to ultraviolet light, exposure to high-temperature and high-humidity environments, and direct contact with moisture assuming rainy weather are performed. In the weathering test, the hard coat layer may become thin due to deterioration. The deteriorated portion is mechanically fragile and prone to cracking due to thermal shrinkage. In the case of the hard coat layer having a large thickness, even if the hard coat layer deteriorates, cracking can be suppressed, and the weather resistance can be maintained. In general, when the thickness of the hard coat layer is increased, the elongation thereof tends to decrease. For these reasons, the weather resistance of the hard coat layer is considered to be affected by the thickness as well as the elongation.

Based on the above findings, as described in Section "EXAMPLES" below, it was found that plotting the data with the thickness of the hard coat layer $\times$ the 25°C elongation on the horizontal axis and the number of clear cycles in the weathering test on the vertical axis revealed a better correlation, compared with plotting the data with the 25°C elongation of the hard coat layer on the horizontal axis and the number of clear cycles in the weathering test on the vertical axis. That is, a hard coat layer having excellent weather resistance can be selected by using the thickness of the hard coat layer × the 25°C elongation (t × E1/100) as an index of weather resistance.

The elongation (70°C elongation) of the hard coat layer at 70°C is preferably 10% or more, more preferably 15% or more, still more preferably 30% or more, even more preferably 35% or more, and preferably 65% or less.

In the transfer film of the present disclosure, letting the thickness of the hard coat layer expressed in units of μm be t, and letting the 70°C elongation of the hard coat layer expressed in units of % be E2, the value of t × E2/100 is preferably 1.05 or more. The value of t × E2/100 is more preferably 1.20 or more, still more preferably 1.30 or more, even more preferably 1.40 or more, and may be 2.50 or more. The upper limit of the value given by t × E2/100 is, but not particularly limited to, for example, 5.50, and 3.50 in one embodiment.

As described above, in the weathering test, the hard coat layer is exposed to a high-temperature environment. The hard coat layer more preferably satisfies these requirements for the 70°C elongation (E2) as well as the 25°C elongation (E1) from the viewpoint of weather resistance.

In one embodiment, the hard coat layer exhibits high hardness. The indentation hardness measured in a cross section of the hard coat layer using a nanoindentation tester is preferably 100 MPa or more, more preferably 200 MPa or more. The cross section is obtained by cutting in the thickness direction perpendicular to the main surface of the transfer film. The upper limit of the indentation hardness of the hard coat layer is, but not particularly limited to, for example, 500 MPa. The hardness of the hard coat layer is preferably higher than the hardness of the primer layer. The hardness of the adhesive layer is preferably higher than the hardness of the primer layer. The details of the measurement conditions for the indentation hardness are described in Section "EXAMPLES".

In one embodiment, the indentation hardness of the primer layer is less than 100 MPa. In one embodiment, the difference in indentation hardness between the hard coat layer and the primer layer is 100 MPa or more. The difference in indentation hardness between the primer layer and the adhesive layer is 100 MPa or more.

The 25°C elongation of the hard coat layer is preferably less than the 25°C elongation of the adhesive layer. The 25°C elongation of the hard coat layer is preferably less than the 25°C elongation of the primer layer.

In one embodiment, the hard coat layer exhibits high abrasion resistance. A difference in haze (ΔHz) before and after the Taber abrasion test of the hard coat layer is preferably 10% or less, more preferably 8% or less. The lower limit of ΔHz is preferably as low as possible, but may be 0.1% or 0.5%, for example. ΔHz is a value obtained by subtracting the haze value before the Taber abrasion test from the haze value after the Taber abrasion test. The Taber abrasion test is performed in accordance with JIS K7204 under the following conditions: abrasion wheel: CS-10F, load: 500 g, number of rotations: 500, and rotation speed: 60 rpm. The haze value is measured in accordance with JIS K7136.

In one embodiment, the hard coat layer exhibits high chemical resistance, specifically ethanol resistance or gasoline resistance. For example, when the hard coat layer is disposed on the resin molded article, it is possible to suppress deterioration in appearance, such as cracking, dissolution, and swelling of the hard coat layer, and peeling of the film in a step of washing its surface with a chemical agent, such as ethanol.

The hard coat layer is preferably a layer formed from a curable composition, that is, a cured product layer of the curable composition. This results in, for example, the hard coat layer excellent in weather resistance, abrasion resistance, and chemical resistance in a well-balanced manner.

Examples of a curable component contained in the curable composition include thermosetting components and actinic energy ray-curable components. An actinic energy ray-curable component is preferred from the viewpoint of weather resistance, abrasion resistance, and chemical resistance.

Examples of thermosetting components include thermosetting resins, such as epoxy resins, melamine resins, guanamine resins, urea resins, unsaturated polyesters, thermosetting urethane resins, thermosetting (meth)acrylic resins, and aminoalkyd resins.

Actinic energy ray-curable components are components that cure upon irradiation with actinic energy rays. Examples of actinic energy rays include electromagnetic waves, such as ultraviolet rays (UV), X-rays, and γ-rays; and charged particle beams, such as electron beams (EB), α-rays, and ion beams.

Examples of actinic energy ray-curable components include polyfunctional (meth)acrylate monomers each having three or more (meth)acryloyl groups in its molecule. Examples of polyfunctional (meth)acrylate monomers include urethane (meth)acrylate monomer; aliphatic monomers, such as trimethylolpropane tri(meth)acrylate, ditrimethylolpropane tri(meth)acrylate, ditrimethylolpropane tetra(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, and dipentaerythritol hexa(meth)acrylate; isocyanurate skeleton-containing monomers, such as tris(2-(meth)acryloyloxyethyl) isocyanurate; and modified products thereof.

Examples of the modified products include ethylene oxide (EO)-modified products, propylene oxide (PO)-modified products, and caprolactone (CL)-modified products. The CL-modified products are preferred from the viewpoint that it is less affected by hydrolysis in high humidity environments and can improve the weather resistance of the hard coat layer. Specific examples of the modified products include EO-modified trimethylolpropane tri(meth)acrylate, PO-modified trimethylolpropane tri(meth)acrylates, EO-modified dipentaerythritol hexa(meth)acrylates, PO-modified dipentaerythritol hexa(meth)acrylates, CL-modified dipentaerythritol hexa(meth)acrylates, and CL-modified tris(2-(meth)acryloxyethyl) isocyanurates.

The urethane (meth)acrylate monomer is a monomer that is formed by allowing a polyisocyanate to react with a hydroxy group-containing (meth)acrylate and that has a urethane bond and a (meth)acryloyl group in its molecule.

Examples of the polyisocyanate include aliphatic polyisocyanates, such as hexamethylene diisocyanate, lysine diisocyanate, and lysine triisocyanate; and alicyclic polyisocyanates, such as isophorone diisocyanate, norbornane diisocyanate, methylenebis(4-cyclohexyl isocyanate), 1,3-bis(isocyanatomethyl)cyclohexane, 2-methyl-1,3-diisocyanatocyclohexane, and 2-methyl-1,5-diisocyanatocyclohexane. As the polyisocyanate, a multimer of an aliphatic polyisocyanate or an alicyclic polyisocyanate, for example, a trimer, such as an isocyanurate, can also be used. The number of isocyanate groups in the polyisocyanate is preferably 2 or more, and preferably 12 or less, more preferably 8 or less.

Examples of the hydroxy group-containing (meth)acrylate include hydroxyethyl (meth)acrylate, hydroxypropyl (meth)acrylate, 4-hydroxybutyl (meth)acrylate, 2-(meth)acryloyloxyethyl-2-hydroxyethyl-phthalic acid, trimethylolpropane di(meth)acrylate, glycerol di(meth)acrylate, bis((meth)acryloyloxyethyl)hydroxyethyl isocyanurate, pentaerythritol tri(meth)acrylate, ditrimethylolpropane tri(meth)acrylate, and dipentaerythritol penta(meth)acrylate; and EO, PO, or CL-modified products thereof. Among these, pentaerythritol tri(meth)acrylate and dipentaerythritol penta(meth)acrylate, and EO, PO or CL modified products thereof are preferred from the viewpoint of improving the abrasion resistance and weather resistance of the hard coat layer.

The number of (meth)acryloyl groups in the polyfunctional (meth)acrylate monomer is preferably 3 or more, preferably 8 or less, more preferably 6 or less, from the viewpoint of improving the abrasion resistance and weather resistance of the hard coat layer.

Among the above polyfunctional (meth)acrylate monomers, isocyanurate skeleton-containing monomers, and modified products thereof are preferred. Isocyanurate skeleton-containing monomers tend to be able to further improve the elongation of the hard coat layer, compared with aliphatic monomers.

Among the polyfunctional (meth)acrylate monomers, a urethane (meth)acrylate monomer in which the polyisocyanate is a multimer of an aliphatic polyisocyanate or an alicyclic polyisocyanate is also preferred. Such a urethane (meth)acrylate monomer tends to be able to further improve the elongation properties of the hard coat layer, compared with a urethane (meth)acrylate monomer in which the polyisocyanate is an aliphatic polyisocyanate or an alicyclic polyisocyanate. This is presumably because the use of the multimer increases the size of a moiety that does not contribute to the curing reaction in the urethane (meth)acrylate to be obtained, and thus the soft segment and the hard segment are clearly separated from each other in the cured product obtained after curing, and the soft segment that contributes to the elongation functions easily.

Examples of the actinic energy ray-curable component also include polymerizable oligomers that have been conventionally used as energy ray-curable resins. Examples of the polymerizable oligomer include oligomers each having two or more (meth)acryloyl groups in its molecule. Specific examples thereof include urethane (meth)acrylate oligomers, such as polyether-based urethane (meth)acrylates, polycarbonate-based urethane (meth)acrylates, and polyester-based urethane (meth)acrylates, epoxy (meth)acrylate oligomers, polyester (meth)acrylate oligomers, and polyether (meth)acrylate oligomers. Among these, urethane (meth)acrylate oligomers are preferred from the viewpoint of being able to further improve the abrasion resistance and weather resistance of the hard coat layer.

Such a urethane (meth)acrylate oligomer is formed by allowing an isocyanate compound, which is formed by the reaction of a polyol with a diisocyanate, to react with a hydroxy group-containing (meth)acrylate, and is an oligomer having a urethane bond and a (meth)acryloyl group in its molecule.

Examples of the polyol include polyether polyol, polycarbonate polyol, and polyester polyol. Examples of the diisocyanate and the hydroxy group-containing (meth)acrylate include the compounds described above.

The number of (meth)acryloyl groups in the urethane (meth)acrylate oligomer is preferably 2 or more, more preferably 4 or more, and preferably 15 or less, more preferably 8 or less. This can, for example, suppress cure shrinkage of the hard coat layer and form the hard coat layer having high surface hardness and excellent durability.

As the actinic energy ray-curable component, a mono(meth)acrylate having one (meth)acryloyl group in its molecule and a di(meth)acrylate having two (meth)acryloyl groups in its molecule may be further used together with the components described above.

The polymerizable double bond equivalent of the actinic energy ray-curable component is preferably 2.0 mmol/g or more, more preferably 2.1 mmol/g or more, and preferably 8.0 mmol/g or less, more preferably 7.5 mmol/g or less. The polymerizable double bond equivalent represents a value obtained by dividing the amount by mole of polymerizable double bond groups (especially $CH_2=CH-$) contained in one molecule of the component by the molecular weight of the component. When the actinic energy ray-curable component is an oligomer, the molecular weight refers to a number-average molecular weight. The polymerizable double bond equivalent can be adjusted, for example, by EO modification, PO modification, or CL modification of the above-described components.

When a component having a high polymerizable double bond equivalent is used, the elongation of the hard coat layer tends to be low. When a component having a low polymerizable double bond equivalent is used, the elongation of the hard coat layer tends to be high. When two or more actinic energy ray-curable components are used, the elongation of the hard coat layer can also be adjusted by the ratio of the amount of component having a high polymerizable double bond equivalent to the amount of component having a low polymerizable double bond equivalent.

The actinic energy ray-curable component content is preferably 50% or more by mass and 100% or less by mass, more preferably 60% or more by mass and 100% or less by mass, still more preferably 70% or more by mass and 100% or less by mass, based on the total solid content of the curable composition. In this case, for example, the abrasion resistance and weather resistance of the hard coat layer can be further improved. The solid content refers to all components other than solvents.

When ultraviolet rays are used as the actinic energy rays, the curable composition preferably contains a photoinitiator that can initiate a curing reaction by irradiation with ultraviolet rays. Examples of the photo initiator include acetophenone-based compounds, benzoin-based compounds, acylphosphine oxide-based compounds, benzophenone-based compounds, thioxanthone-based compounds, and aminobenzophenone-based compounds.

When ultraviolet rays are used as the actinic energy rays, the curable composition may further contain a photosensitizer. Examples of the photosensitizer include tertiary amine compounds, such as triethanolamine, N-methyldiethanolamine, and tributylamine; urea compounds, such as o-tolylthiourea; and sulfur compounds, such as sodium diethyldithiophosphate and s-benzylisothiuronium p-toluenesulfonate.

Each of the proportions of photoinitiator and photosensitizer contained in the solid content of the curable composition is preferably 0.05% or more by mass, more preferably 0.5% or more by mass, and preferably 20% or less by mass, more preferably 10% or less by mass. When a charged particle beam, such as an electron beam, is used as the actinic energy ray, neither the photoinitiator nor the photosensitizer need be used.

The curable composition can contain a silicone compound from the viewpoints of improving the abrasion resistance and weather resistance and achieving excellent transparency. Examples of the silicone compound include silicone oils composed of polysiloxanes, polyether-modified silicone oils, aralkyl-modified silicone oils, fluoroalkyl-modified silicone oils, long-chain alkyl-modified silicone oils, higher fatty acid ester-modified silicone oils, and higher fatty acid amide-modified silicone oils, and phenyl-modified silicone oils. The silicone compound may be a reactive silicone compound having a reactive functional group, such as an amino group, an epoxy group, a mercapto group, a carboxy group, a hydroxy group, a (meth) acryloyl group, or an allyl group, or may be a non-reactive silicone compound having no reactive functional group.

The silicone compound content of the curable composition is preferably 0.05 parts or more by mass, and preferably 30 parts or less by mass, more preferably 10 parts or less by mass, based on 100 parts by mass of the curable component. In this case, for example, excellent weather resistance and abrasion resistance can be provided, and cure shrinkage can be suppressed.

The curable composition and hard coat layer can contain a weather resistance improver. In this case, for example, the weather resistance of the hard coat layer can be improved. Examples of the weather resistance improver include ultraviolet absorbers, antioxidants, and light stabilizers.

Examples of ultraviolet absorbers include inorganic ultraviolet absorbers, such as titanium dioxide, cerium oxide, and zinc oxide; and organic ultraviolet absorbers, such as benzotriazole-based ultraviolet absorbers, triazine-based ultraviolet absorbers, benzophenone-based ultraviolet absorbers, oxybenzophenone-based ultraviolet absorbers, salicylate-based ultraviolet absorbers, and cyano (meth)acrylate-based ultraviolet absorbers. Among these, organic ultraviolet absorbers are preferred, and triazine-based ultraviolet absorbers are more preferred.

Among triazine-based ultraviolet absorbers, hydroxyphenyltriazine-based ultraviolet absorbers are preferred. Examples of hydroxyphenyltriazine-based ultraviolet absorbers include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, and 2-[4-[(2-hydroxy-3-(2'-ethyl)hexyl)oxy]-2-hydroxyphenyl]-4,6-bis(2,4-dimethylphenyl)-1,3,5-triazine.

Examples of antioxidants include phenolic antioxidants, phosphorus antioxidants, and ionic antioxidants.

Examples of light stabilizers include hindered amine light stabilizers. Examples of hindered amine light stabilizers include 2,2,6,6-tetramethyl-4- piperidinyl stearate, tetradecyl 2,2,4,4-tetramethyl-21-oxo-3,20-diaza-7-oxadispiro[5.1.11.2]heneicosan-20-ylpropanoate, tetrakis(2,2,6,6-tetramethylpiperidine-4-carboxylic acid) 1,2,3,4-butanetetryl ester, bis(2,2,6,6-tetramethyl-4-piperidinyl) sebacate, bis(1,2,2,6,6-pentamethyl-4-piperidyl) sebacate, 2-[[3,5-bis(1,1-dimethylethyl)-4-hydroxyphenyl]methyl]-2-butylpropanedioic acid bis(1,2,2,6,6-pentamethyl-4-piperidinyl) ester, bis(2,2,6,6-tetramethyl-1-(octyloxy)piperidin-4-yl) decanedioate, tetrakis(1,2,2,6,6-pentamethyl-4-piperidyl) 1,2,3,4-butanetetracarboxylate, a polycondensate of dimethyl succinate with 1-(2-hydroxyethyl)-4-hydroxy-2,2,6,6-tetramethyl-4-piperidine, 1,2,2,6,6-pentamethyl-4-piperidinyl methacrylate, and poly[[6-[(1,1,3,3-tetramethylbutyl)amino]-1,3,5-triazine-2,4-diyl][(2,2,6,6-tetramethylpiperidyl)imino]hexamethylene[(2,2,6,6-tetramethylpiperidyl)imino]].

When the weather resistance improver is used, the proportion of the weather resistance improver contained in the solid content of the curable composition and the hard coat layer is preferably 0.1% or more by mass, and preferably 30% or less by mass, more preferably 20% or less by mass, still more preferably 15% or less by mass.

The curable composition and hard coat layer can contain particles. In this case, for example, the abrasion resistance of the hard coat layer can be improved. Examples of the particles include inorganic particles and organic particles.

Examples of the inorganic particles include inorganic particles composed of a metal oxide, such as alumina, silica, zirconia, titania, zinc oxide, or iron oxide; and inorganic particles composed of diamond or silicon carbide. Among these, inorganic particles composed of silica or alumina are preferred from the viewpoints of improving transparency and abrasion resistance. Examples of the shape of the particles include spherical, ellipsoidal, polyhedral, and scaly shapes. A spherical shape is preferred from the viewpoints of providing higher hardness and excellent abrasion resistance.

The inorganic particles may be non-reactive inorganic particles or reactive inorganic particles having reactive functional groups on their surfaces. Examples of the reactive functional groups include a (meth)acryloyl group, a vinyl group, an allyl group, an epoxy group, and a silanol group. A (meth)acryloyl group, a vinyl group, and an allyl group are preferred from the viewpoint of improving hardness and abrasion resistance.

Examples of the organic particles include synthetic resin particles, such as crosslinked (meth)acrylic resin particles and polycarbonate resin particles.

The average primary particle size of the particles is preferably 10 nm or more, and preferably 1,000 nm or less, more preferably 100 nm or less. The average particle size is a volume-average particle size measured with a laser diffraction particle size distribution analyzer. The particles having an average primary particle size of 10 nm or more and 1,000 nm or less may form particle groups (modified particles) that are connected aggregates with an average number of particles connected of 2 or more and 20 or less. The connected aggregates may be regular or irregular.

The proportion of the particles contained in the solid content of the curable composition and the hard coat layer is preferably less than 20% by mass, more preferably 15% or less by mass, and preferably 5% or more by mass. In this case, for example, the abrasion resistance can be further improved while maintaining the weather resistance of the hard coat layer. A high proportion of the particles contained results in a tendency to decrease the elongation of the hard coat layer.

In one embodiment, the area fraction of the particles in the hard coat layer is preferably 22% or less, more preferably 20% or less. The lower limit of the area fraction is, but not particularly limited to, for example, 6%.

The area fraction of particles in the hard coat layer can be measured by observation of a thin section of the hard coat layer with a scanning transmission electron microscope (STEM) and image analysis. The measurement method is as follows: A 70 nm-thick thin section is cut from the hard coat layer with a microtome, and a cross-sectional image is acquired by STEM observation. Using image analysis software ImageJ, particles and a binder (usually, a cured product of a curable component) in the cross-sectional image are binarized to provide a black-and-white image, and the area fraction of the particles is calculated. Specifically, an image of 1,024 × 512 pixels is selectively extracted from the STEM image. After the baseline is adjusted by a rolling ball method, binarization determination is performed by an Otsu method. The proportion of a black portion area to the total (area of a target region) of the black portion area and the white portion area is calculated. The analysis rule for the baseline or the binarization may be such that the actual image and the analyzed image are visually determined by a human, and an apparent particle is not determined as a binder. However, the thin section does not contain the outermost surface of the hard coat layer, and is selected from the intermediate portion of the hard coat layer. The above thin film sections are obtained by cutting parallel to the main surface of the transfer film.

The hard coat layer can contain additives. Examples of the additives include polymerization inhibitors, antistatic agents, adhesion improvers, leveling agents, thixotropic agents, coupling agents, plasticizers, defoamers, flame retardants, surfactants, antifogging agents, bactericides, fillers, and colorants.

The curable composition may contain an organic solvent, for example, from the viewpoint of improving its coatability. Examples of the organic solvent include hydrocarbon solvents, such as toluene, xylene, hexane, and octane; alcohol solvents, such as ethanol, propanol, butanol, pentanol, hexanol, octanol, and decanol; ketone solvents, such as acetone, methyl ethyl ketone, methyl isobutyl ketone, diisobutyl ketone, and cyclohexanone; and ester solvents, such as ethyl acetate, butyl acetate, amyl acetate, ethyl butyrate, butyl butyrate, butyl stearate, methyl benzoate, methyl lactate, ethyl lactate, and butyl lactate.

The thickness of the hard coat layer is preferably 1 μm or more, more preferably 2 μm or more, still more preferably 3 μm or more, and may be 4 μm or more, 6 μm or more, or 8 μm or more, and is preferably 30 μm or less, more preferably 20 μm or less, still more preferably 15 μm or less, particularly preferably 13 μm or less. In this case, for example, the abrasion resistance and weather resistance of the hard coat layer can be further improved.

The hard coat layer is formed, for example, as follows: The curable composition is applied to a desired thickness on a substrate to form a coating film. When an organic solvent is used, the organic solvent is removed by drying to form a coating film. When a thermosetting component is used, the coating film is cured by heating at a temperature required for curing. When an actinic energy ray-curable component is used, the coating film is cured by irradiation with actinic energy rays. Irradiation with actinic energy rays may be performed from the coating film side of the curable composition or from the substrate side. In this way, a hard coat layer can be formed. The curing treatment may be performed after coating the curable composition and before forming another layer, or after forming another layer.

Examples of a method for applying the curable composition to a substrate include a dipping method, a flow coating method, a spray method, a spin coating method, a gravure coating method, a microgravure coating method, a die coating method, a slit reverse method, a roll coating method, a blade coating method, an air knife coating method, an offset method, and a bar coating method.

When an electron beam is used as an actinic energy ray, the dose of the electron beam is preferably 0.5 Mrad or more, more preferably 1 Mrad or more, still more preferably 3 Mrad or more, and preferably 30 Mrad or less, more preferably 20 Mrad or less, still more preferably 15 Mrad or less.

When ultraviolet rays are used as the actinic energy rays, for example, irradiation is performed with light containing ultraviolet rays with a wavelength of 190 nm or more and 380 nm or less. Examples of light sources include xenon lamps, low-pressure mercury lamps, high-pressure mercury lamps, ultra-high-pressure mercury lamps, metal halide lamps, carbon arc lamps, and tungsten lamps.

The infrared absorption spectrum (IR spectrum) of the hard coat layer is measured by an attenuated total reflection method (ATR measurement method) with an infrared spectrophotometer. In an IR spectrum in which the horizontal axis represents the wavenumber ($cm^{-1}$) and the vertical axis represents the absorption intensity, the absorption intensity of each peak is calculated by a tangent method as follows: Valleys on both sides of a peak observed at 1,480 to 1,580 $cm^{-1}$ (for example, the minimum of the valley at about 1,480 $cm^{-1}$ and the minimum of the valley at about 1,580 $cm^{-1}$) are connected by a straight line to set a baseline. The height of the maximum of a peak observed at about 1,520 $cm^{-1}$ from the baseline is defined as absorption intensity $A_{1520}$. The absorption intensity $A_{1520}$ is the absorption intensity of an absorption spectrum originating from a urethane group. Valleys on both sides of a peak observed at 1,600 to 1,800 $cm^{-1}$ (for example, the minimum of the valley at about 1,600 $cm^{-1}$ and the minimum of the valley at about 1,800 $cm^{-1}$) are connected by a straight line to set a baseline. The height of the maximum of a peak observed at about 1,720 $cm^{-1}$ from the baseline is defined as absorption intensity $A_{1720}$. The absorption intensity $A_{1720}$ is the absorption intensity of an absorption spectrum originating from an ester group. If there is no valley on one or both sides of the peak, the tail of the peak may be used in drawing the baseline.

The absorption intensity $A_{1520}$ and the absorption intensity $A_{1720}$ preferably satisfy the following relational expression (1):

$$A_{1520}/A_{1720} \leq 0.13 \ (1).$$

$A_{1520}/A_{1720}$ is preferably 0.12 or less, more preferably 0.10 or less, still more preferably 0.08 or less, even more preferably 0.05 or less.

$A_{1520}/A_{1720}$ is an index of the urethane bond content of the hard coat layer. $A_{1520}/A_{1720}$ can be adjusted by, for example, the amount of urethane component, such as urethane (meth)acrylate, used as a component forming the hard coat layer. In one embodiment, the proportion of the urethane component, such as urethane (meth)acrylate, contained may be 30% or less by mass, 20% or less by mass, 10% or less by mass, or 5% or less by mass, based on the total solid content of the curable composition.

When an accelerated weathering test using a metal halide lamp (MWOM) is performed on a test specimen including a hard coat layer having a relatively high $A_{1520}/A_{1720}$ value, the $A_{1520}/A_{1720}$ value tends to decrease over time. This will mean that when the hard coat layer has urethane bonds, the urethane bonds are cleaved over time in the accelerated weathering test. Even if such a hard coat layer can satisfactorily suppress cracking, the appearance (gloss value and surface smoothness) may deteriorate over time. The hard coat layer satisfying relational expression (1) described above has a low urethane bond content and thus can suppress such a deterioration in appearance. Accordingly, when it is desirable to suppress not only cracking but also the deterioration in appearance (gloss value and surface smoothness), a hard coat layer satisfying relational expression (1) described above is preferred.

In the present disclosure, the infrared absorption spectrum by the ATR measurement method with an infrared spectrophotometer is measured using a Fourier transform infrared spectrophotometer FT/IR-6100 (available from JASCO Corporation) under the following measurement conditions.

(Measurement Conditions)

A sample chamber is set to a temperature of 23°C and a humidity of 50%. An optical path is purged with, for example, dry air or high-purity nitrogen gas to stabilize the environment. A hard coat layer is brought into contact with a measurement site (sensor portion) of an infrared spectrophotometer. IR measurement (ATR crystal: diamond crystal prism, incident angle: 45°, resolution: 4.0 $cm^{-1}$, the number of acquisitions: 8 times) is performed.

<Adhesive Layer>

In the transfer film of the present disclosure, the transfer layer includes the adhesive layer. The adhesive layer has a function of allowing the transfer layer to adhere to a surface of a transfer-receiving article. In one embodiment, the adhesive layer is included in the surface layer of the transfer layer. The adhesive layer is a layer that comes into contact with the transfer-receiving article after transfer. The transfer layer (hard coat film) can be satisfactorily transferred and attached to the transfer-receiving article.

In one embodiment, the adhesive layer contains a resin material. Examples of the resin material include thermoplastic resins, such as (meth)acrylic resins, polyolefins, chlorinated polyolefins, vinyl chloride-vinyl acetate copolymers, polystyrene, polyesters, amide resins, and urethane resins. As the resin material, a (meth)acrylic resin, such as poly(methyl (meth)acrylate), is preferred from the viewpoints of easily improving the transparency and weather resistance of the adhesive layer.

The adhesive layer preferably has heat sealability. When the adhesive layer has heat sealability, that is, when the adhesive layer is a heat-sealable layer, the adhesive layer contains the above-described thermoplastic resin that can be melted by heating.

The adhesive layer can contain additives. Examples of additives include weather resistance improvers, such as ultraviolet absorbers, antioxidants, and light stabilizers, abrasion resistance improvers, infrared absorbers, antistatic agents, adhesion improvers, leveling agents, thixotropic agents, coupling agents, plasticizers, defoamers, fillers, and colorants.

In one embodiment, the adhesive layer contains a weather resistance improver. Specific examples of the weather resistance improver are as described above. When the weather resistance improver is used, the weather resistance improver content of the adhesive layer is preferably 0.1% or more by mass, and preferably 10% or less by mass, more preferably 5% or less by mass, still more preferably 3% or less by mass.

The thickness of the adhesive layer is preferably 1 $\mu$m or more, and preferably 10 $\mu$m or less, more preferably 5 $\mu$m or less. In this case, it is possible to ensure both the function of allowing the transfer layer to adhere to the transfer-receiving article and excellent transparency.

The adhesive layer can be formed, for example, by applying a composition (adhesive layer composition) containing a component constituting the adhesive layer to the hard coat layer or the primer layer, and drying it, as needed.

<Primer Layer>

In one embodiment, the transfer layer of the transfer film of the present disclosure includes the primer layer between the hard coat layer and the adhesive layer. The primer layer has a function of improving adhesion between the hard coat layer and other layers, such as the adhesive layer.

In one embodiment, the primer layer contains a resin material. Examples of the resin material include (meth)acrylic resins, urethane resins, butyral resins, polyolefins, chlorinated polyolefins, vinyl chloride-vinyl acetate copolymers, and polyesters. Among these, a urethane resin is preferred.

As the urethane resin, a urethane resin having a (meth)acrylic skeleton in a polyurethane polymer chain is preferred from the viewpoint of weather resistance and durability. Examples of the urethane resin having a (meth)acrylic skeleton in the polyurethane polymer chain include a urethane-(meth)acrylic copolymer, which is a copolymer of a urethane component and a (meth)acrylic component; and a resin in which a (meth)acrylic resin having a hydroxy group or an isocyanate group is used as a polyol component or a polyisocyanate component constituting polyurethane. Among these, the urethane-(meth)acrylic copolymer is preferred. As the urethane-(meth)acrylic copolymer, for example, a urethane-(meth)acrylic block copolymer is preferred.

From the viewpoint of adhesion between the primer layer and the hard coat layer, preferably, the urethane-(meth)acrylic copolymer further contains a polycarbonate skeleton or polyester skeleton in the polyurethane polymer chain. Examples of such a urethane-(meth)acrylic copolymer include a polycarbonate-based urethane-(meth)acrylic copolymer, which is a copolymer of a polycarbonate-based urethane component and a (meth)acrylic component; and a polyester-based urethane-(meth)acrylic copolymer, which is a copolymer of a polyester-based urethane component and a (meth)acrylic component.

The urethane-(meth) acrylic copolymer can be formed by, for example, a method for reacting a (meth)acrylic resin having at least two hydroxy groups in one molecule with a polyol and a polyisocyanate (for example, see Japanese Unexamined Patent Application Publication No. 6-100653) or a method for reacting a urethane prepolymer having an unsaturated double bond at each end with a (meth)acrylic monomer (for example, see Japanese Unexamined Patent Application Publication No. 10-1524).

In the urethane resin, the urethane component/(meth)acrylic component (ratio by mass) is preferably 10/90 or more, more preferably 20/80 or more, still more preferably 70/30 or more, and preferably 99/1 or less, more preferably 95/5 or less, still more preferably 90/10 or less. In this case, for example, the weather resistance can be further improved.

The (meth)acrylic component content of the urethane resin is the proportion of the monomer units constituting the (meth)acrylic skeleton to the total mass of the urethane resin. The (meth)acrylic component content of the urethane resin is calculated by measuring the NMR spectrum of the urethane resin and determining the proportion of the area of a peak assigned to the (meth)acrylic component to the total peak area.

The weight-average molecular weight of the urethane resin is preferably 10,000 or more, more preferably 30,000 or more, and preferably 100,000 or less, more preferably 80,000 or less. In this case, for example, the weather resistance can be further improved. The weight-average molecular weight in this specification is determined by gel permeation chromatography (GPC) in terms of standard polystyrene.

In one embodiment, the primer layer contains a binder resin composed of a two-component curing-type resin. A two-component curing-type resin includes a main agent and a curing agent. Examples of the main agent include the resin materials described above, and a urethane resin is preferred. Examples of the curing agent include isocyanate curing agents, such as tolylene diisocyanate, diphenylmethane diisocyanate, hexamethylene diisocyanate, xylylene diisocyanate, cyclohexanephenylene diisocyanate, and naphthalene 1,5-diisocyanate. The amount of curing agent used is preferably 1 part or more by mass, more preferably 10 parts or more by mass, and preferably 40 parts or less by mass, more preferably 30 parts or less by mass, based on 100 parts by mass of the main agent.

The primer layer can contain additives. Examples of additives include weather resistance improvers, such as ultraviolet absorbers, antioxidants, and light stabilizers, abrasion resistance improvers, infrared absorbers, antistatic agents, adhesion improvers, leveling agents, thixotropic agents, coupling agents, plasticizers, defoamers, fillers, and colorants.

In one embodiment, the primer layer contains a weather resistance improver. Specific examples of the weather resistance improver are as described above. When the weather resistance improver is used, the weather resistance improver content of the primer layer is preferably 0.1% or more by mass, and preferably 10% or less by mass, more preferably 5% or less by mass, still more preferably 3% or less by mass.

The thickness of the primer layer is preferably 0.1 $\mu$m or more, and preferably 10 $\mu$m or less, more preferably 5 $\mu$m or less. In this case, for example, the adhesion between the hard coat layer and the adhesive layer can be further improved.

The primer layer can be formed, for example, by applying a composition (primer layer composition) containing a component constituting the primer layer to the hard coat layer, and, if necessary, drying and curing it. The hard coat layer may be subjected to surface treatment before the primer layer is disposed. Examples of the surface treatment include corona discharge treatment, plasma treatment, chromium oxidation treatment, flame treatment, hot air treatment, and ozone/ultraviolet treatment. Thereby, for example, the adhesion between the primer layer and the hard coat layer can be improved.

<Decorative Layer>

In the transfer film of the present disclosure, the transfer layer can include a decorative layer. This can, for example, impart design and other properties to the formed article that is a transfer-receiving article, in addition to weather resistance and abrasion resistance. In one embodiment, the transfer layer has a decorative layer on the surface of the primer layer opposite to the hard coat layer.

In one embodiment, the decorative layer contains a resin material and a colorant. Examples of the resin material include (meth)acrylic resins, polyolefins, chlorinated polyolefins, vinyl chloride-vinyl acetate copolymers, polystyrenes, polyesters, and cellulose resins.

Examples of the colorant include inorganic pigments, such as carbon black, iron black, titanium white, antimony white, chrome yellow, titanium yellow, red iron oxide, cadmium red, ultramarine blue, and cobalt blue; and organic pigments or dyes, such as azo, phthalocyanine, anthraquinone, perylene, perinone, quinacridone, thioindigo, dioxazine, isoindolinone, quinophthalone, azomethineazo, dictopyrrolopyrrole, and isoindoline pigments or dyes.

The decorative layer may be disposed on a part of the surface of the primer layer opposite to the hard coat layer, or may be disposed on the entire surface. The decorative layer may be a layer that entirely covers a surface of the primer layer opposite to the hard coat layer. The decorative layer may be a patterned layer including a region where the decorative layer is disposed and a region where the decorative layer is not disposed on the surface of the primer layer opposite to the hard coat layer. The patterned decorative layer can include images, such as letters, graphics, symbols, and combinations thereof.

The decorative layer may be transparent, translucent, or opaque.

Examples of a method for forming the decorative layer include known printing methods, such as gravure printing, offset printing, silk screen printing, transfer printing from a transfer sheet, sublimation transfer printing, and inkjet printing.

The thickness of the decorative layer is preferably 1 $\mu$m or more, more preferably 5 $\mu$m or more, and preferably 40 $\mu$m or less, more preferably 30 $\mu$m or less.

<Cover Film>

The transfer film of the present disclosure may include a cover film on the adhesive layer. In this case, the surface of the transfer layer can be protected. The cover film is peeled off from the adhesive layer when the transfer film is used. The cover film is peeled off from the adhesive layer to expose the adhesive layer, and the hard coat layer is transferred to the formed article with the adhesive layer.

The cover film is composed of, for example, a resin material, such as polyolefin.

[Hard Coat Film]

A hard coat film of the present disclosure includes a second substrate and a hard coat layer.

In one embodiment, the hard coat film of the present disclosure includes an adhesive layer on a surface of the second substrate opposite to the surface of the second substrate adjacent to the hard coat layer. Thereby, the adhesion between the formed article and the hard coat film can be improved. In this embodiment, the hard coat film of the present disclosure includes the adhesive layer, the second substrate, and the hard coat layer in that order in the thickness direction. In this case, the configuration of the hard coat film of the present disclosure is the same as that of the transfer film, except that the first substrate in the transfer film is positioned between the hard coat layer and the adhesive layer.

The adhesive layer need not be disposed on the surface of the second substrate opposite to the surface of the second substrate adjacent to the hard coat layer. For example, as in the case of the in-mold molding method and the insert molding method, the hard-coated formed article may be manufactured by forming the resin molded article on the second substrate. In this case, the hard coat layer is located at the surface layer of the hard-coated formed article. Thus, for example, the weather resistance, abrasion resistance, and chemical resistance of the hard-coated formed article can be improved.

The adhesive layer may be disposed between any layers (for example, between the hard coat layer and the second substrate) of the hard coat film. Thereby, delamination between layers can be suppressed.

In one embodiment, the hard coat film of the present disclosure includes a primer layer between the second substrate and the hard coat layer. In one embodiment, the hard coat film of the present disclosure includes a cover film on the outer adhesive layer. In one embodiment, the hard coat film of the present disclosure includes a decorative layer between the second substrate and the primer layer.

A configuration of the transfer film according to an embodiment of the present disclosure will be described below with reference to the drawings as appropriate. As illustrated in Fig. 3, in one embodiment, a hard coat film 2 includes a second substrate 10, the primer layer 23, and the hard coat layer 22 in that order in the thickness direction. As illustrated in Fig. 4, in one embodiment, the hard coat film 2 includes the adhesive layer 24 on a surface of the second substrate 10 opposite to the surface of the second substrate adjacent to the hard coat layer 22.

In one embodiment, the surface layer on one side of the hard coat film is the hard coat layer, and the surface layer on the other side is the adhesive layer. The hard coat film of the present disclosure can be attached to a formed article, which is an adherend, in such a manner that the adhesive layer is in contact with the formed article. The hard coat layer is located at the surface layer of the hard-coated formed article; thus, for example, the weather resistance, abrasion resistance, and chemical resistance of the hard-coated formed article can be improved.

Also in the hard coat film of the present disclosure, various physical properties of the hard coat layer, such as the 25°C elongation, the 70°C elongation, the value of $t \times E1/100$, the value of $t \times E2/100$, the hardness, and the difference in haze, are the same as those of the hard coat layer in the transfer film of the present disclosure, and thus descriptions thereof are omitted here. The elongation, the hardness, and the difference in haze can be measured for the hard coat film. In the hard coat film of the present disclosure, the value of $t \times E1/100$ is preferably 1.50 or more, more preferably 1.60 or more, still more preferably 1.75 or more, particularly preferably 1.80 or more, and may be 2.60 or more. The upper limit of the value of $t \times E1/100$ is, but not particularly limited to, 5.00, for example, and 3.50 in one embodiment.

Each component of the hard coat film of the present disclosure will be described below. The details of the hard coat layer, the primer layer, the decorative layer, and the cover film in the hard coat film are the same as those described in the item of the transfer film, and descriptions thereof are omitted here.

The second substrate in the hard coat film of the present disclosure is disposed on the formed article together with other layers without being peeled off when the hard coat film of the present disclosure is disposed on the formed article.

Examples of the second substrate include a resin film similar to the first substrate in the transfer film. The second substrate in the hard coat film is preferably transparent because it is placed on the formed article.

If necessary, the surface of the second substrate adjacent to the hard coat layer may be subjected to known surface modification treatment, or may be provided with a coating layer of an easy-adhesion coating agent. In this case, for example, the adhesion between the second substrate and the hard coat layer can be improved. An adhesive layer may be disposed between the second substrate and the hard coat layer.

The thickness of the second substrate is preferably 5 μm or more, more preferably 10 μm or more, and preferably 200 μm or less, more preferably 100 μm or less. When the second substrate has a multilayer structure, the thickness of the entire multilayer structure preferably falls within the above range.

Examples of an adhesive contained in the adhesive layer include (meth)acrylic resins, ethylenevinyl acetate copolymers, polyesters, imide resins, urethane resins, latex resins, and fluororesins, such as vinylidene fluoride resins and vinyl fluoride resins.

The adhesive layer may be a heat-sealable layer.

The adhesive layer can contain the above additives.

The thickness of the adhesive layer is preferably 1 μm or more, and preferably 10 μm or less, more preferably 5 μm or less. In this case, sufficient adhesive strength can be provided when the hard coat film of the present disclosure is attached to the formed article.

In one embodiment, the hard coat film of the present disclosure preferably has a visible light transmittance of 70% or higher, more preferably 80% or higher, still more preferably 85% or higher. In this case, the hard coat film of the present disclosure can be suitably used for applications requiring high visibility, such as plastic glazing. The visible light transmittance is a total luminous transmittance in the visible light wavelength range with respect to illuminant C or illuminant D65. The total luminous transmittance is measured according to JIS K7361-1.

The hard coat film of the present disclosure can be formed, for example, by applying a primer layer composition onto one surface of the second substrate and curing it as necessary to form the primer layer, and then applying and curing a hard coat layer composition onto the primer layer to form the hard coat layer. An adhesive layer may be formed by applying an adhesive to a surface of the second substrate opposite to the surface of the second substrate adjacent to the primer layer.

The use of the hard coat film of the present disclosure can impart excellent weather resistance, abrasion resistance, and chemical resistance to the formed article. The hard coat film of the present disclosure can be suitably used for a formed article that is exposed to direct sunlight or wind and rain and that is used in applications that require the hard coat film to have resistance to severe weather.

[Hard-Coated Formed Article and Method for Manufacturing the Same]

The hard-coated formed article of the present disclosure includes a formed article and a surface protective film disposed over at least a partial region of the surface of the formed article.

In one embodiment, the surface protective film is the transfer layer in the transfer film of the present disclosure, and the hard coat layer included in the transfer layer constitutes the surface layer of the hard-coated formed article. In one embodiment, as illustrated in Fig. 5, a hard-coated formed article 3 includes a formed article 30 and the transfer layer 20 disposed on the surface of the formed article 30. In the embodiment of Fig. 5, the transfer layer 20 includes the adhesive layer 24, the primer layer 23, and the hard coat layer 22 in that order from the formed article 30 side.

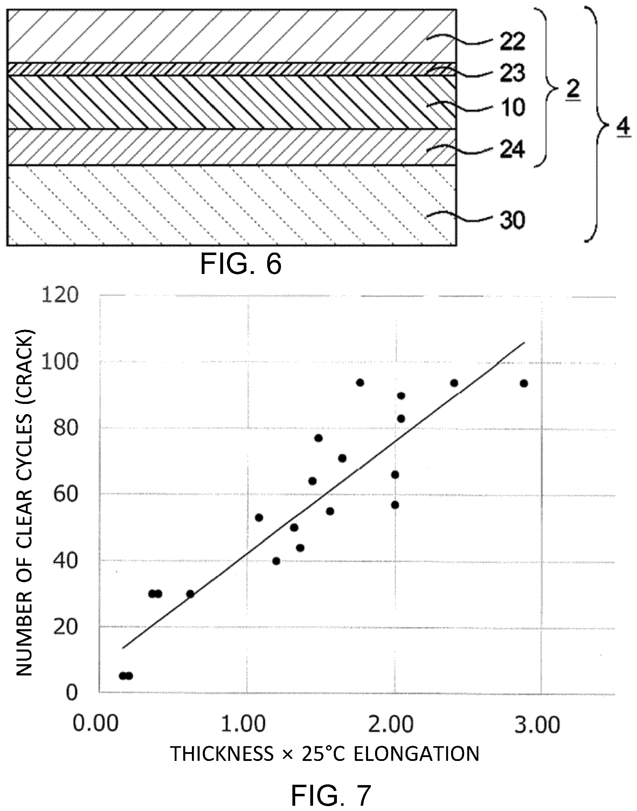

In one embodiment, the surface protection film is the hard coat film of the present disclosure, and the hard coat layer included in the hard coat film constitutes the surface layer of the hard-coated formed article. In one embodiment, as illustrated in Fig. 6, the hard-coated formed article 4 includes the formed article 30 and the hard coat film 2 disposed on the surface of the formed article 30. In the embodiment of Fig. 6, the hard coat film 2 includes the adhesive layer 24, the second substrate 10, the primer layer 23, and the hard coat layer 22 in that order from the formed article 30 side. In Fig. 6, the adhesive layer 24 need not be provided.

The formed article is a transfer-receiving article to which the transfer layer of the transfer film of the present disclosure is transferred, or an adherend on which the hard coat film of the present disclosure is disposed.

Examples of the material of a portion where the transfer layer of the transfer film of the present disclosure is transferred or the hard coat film of the present disclosure is disposed in the formed article include resin materials. Examples of the resin materials include polycarbonate; (meth)acrylic resins, such as poly(methyl (meth)acrylate) and poly(meth)acrylate; polyolefins, such as polyethylene and polypropylene; cyclic polyolefins; polystyrene; acrylonitrile-butadiene-styrene (ABS) copolymers; vinyl resins, such as poly(vinyl alcohol), poly(vinyl acetate), poly(vinyl chloride), and poly(vinyl fluoride); polyesters, such as poly(ethylene terephthalate) and poly(ethylene naphthalate); polysulfones, poly(ether sulfone), poly(ether ketone), poly(ether imide); and amide resins and imide resins.

The formed article is preferably a resin molded article composed of a resin material, more preferably a resin molded article composed of a transparent resin material, still more preferably a resin formed article composed of an organic resin glass that is transparent and strong and that can be used as a substitute material for inorganic glass, and is, for example, what is called plastic glazing. Examples of the organic resin glass include polycarbonate, poly(methyl methacrylate), poly(ethylene terephthalate), poly(ethylene naphthalate), and ABS copolymers. Among these, polycarbonate is preferable because of its excellent transparency and impact resistance.

The formed article is preferably a formed article that is used in applications that come into contact with the outside air (outdoor air), more preferably a formed article that is used outdoors. In the present specification, a formed article used for applications exposed to the open air is also referred to as an "exterior material". In the hard-coated formed article of the present disclosure, the surface protection film is preferably disposed on at least a partial region of the surface of the formed article that comes into contact with the outside air.

Examples of the formed article include exterior materials for vehicles, ships, and aircraft, exterior materials for building structures, exterior materials for industrial machines, and various lenses. Examples of vehicles include automobiles, railcars, construction equipment, and light vehicles such as golf carts. The transfer film and the hard coat film of the present disclosure can be used for, for example, exterior materials for vehicles, ships, and aircraft, exterior materials for building structures, exterior materials for industrial machines, and various lenses, and in particular, can be suitably used for plastic glazing.

Examples of exterior materials for vehicles include window materials, such as a side window, a rear window, a roof window, a front window, and a quarter window; a headlight cover, a turn signal flasher lens, and a reflector; and a pillar. The window materials are preferred. Plastic glazing is more preferred. Examples of exterior materials for building structures include window materials, transparent plastic members that constitute soundproof walls or windbreaks on general roads and highways, balcony partitions, roofing members on terraces or carports, and transparent plastic members that constitute agricultural greenhouses. Examples of exterior materials for industrial machines include viewing window materials in machine tools. Examples of lenses include lenses for traffic lights; optical lenses for cameras, camcorders, and magnifying glasses; spectacle lenses; and lenses for watches.

The formed article is not limited to the above examples. Examples thereof may include interior materials for vehicles, ships, and aircraft, interior materials for building structures, front plates for various display devices, traffic mirrors, traffic signs, and nameplates.

The hard-coated formed article of the present disclosure can be obtained, for example, by using the transfer film of the present disclosure and transferring the transfer layer of the transfer film onto a surface of the formed article. The hard-coated formed article of the present disclosure is obtained, for example, by disposing the hard coat film of the present disclosure on a surface of the formed article.

More specifically, the transfer film of the present disclosure is attached to at least a partial region of a surface of the formed article in such a manner that the adhesive layer in the transfer film is in contact with the surface of the formed article. Then the first substrate of the transfer film is peeled off. In this way, the hard-coated formed article is obtained. For transfer, for example, known roll transfer, press transfer, or in-mold molding can be used. The above attachment may be performed under heat and pressure. The hard coat film of the present disclosure is disposed on at least a partial region of a surface of the formed article in such a manner that the surface of the formed article is in contact with the second substrate or the adhesive layer of the hard coat film.

After disposing the film on the formed article, the resulting hard-coated formed article may be subjected to processing such as bending. Such processing can be performed because the film is excellent in elongation properties. In the case of the transfer film, the processing may be performed either before or after peeling of the first substrate.

The hard-coated formed article of the present disclosure may be manufactured, for example, by simultaneously forming the formed article and disposing the film. For example, a resin is injected onto the adhesive layer of the transfer film or onto the second substrate or adhesive layer of the hard coat film to integrate these films with the resin molded article (injection molded article). In the case of the transfer film, the first substrate is then peeled off. In this case, examples of a method for forming the resin molded article include various injection molding methods, such as an in-mold molding method, an insert molding method, an injection molding simultaneous decoration method, a blow molding method, and a gas injection molding method.

The present disclosure relates to, for example, [1] to [22] below.

[1] A transfer film includes a first substrate and a transfer layer, in which the transfer layer includes a hard coat layer and an adhesive layer in that order from a first substrate side, the hard coat layer has an elongation at 25°C of 10% or more and 60% or less, and in which letting a thickness of the hard coat layer expressed in units of $\mu$m be t, and letting the elongation of the hard coat layer expressed in units of % be E1, the value of $t \times E1/100$ is 1.40 or more.

[2] The transfer film described in [1] further includes a primer layer between the hard coat layer and the adhesive layer.

[3] In the transfer film described in [2], the hardness of the hard coat layer is higher than the hardness of the primer layer, the hardness of the adhesive layer is higher than the hardness of the primer layer, and the hardness is indentation hardness measured using a nanoindentation tester on a cross section of each layer.

[4] In the transfer film described in any one of [1] to [3], a difference in haze ($\Delta$Hz) before and after a Taber abrasion test (abrasion wheel: CS-10F, load: 500 g, the number of rotations: 500, and rotation speed: 60 rpm) of the hard coat layer is 10% or less.

[5] In the transfer film described in any one of [1] to [4], the hard coat layer contains particles having an average primary particle size of 10 nm or more and 1,000 nm or less, and the area fraction of the particles is 22% or less, the area fraction being measured by observation of a thin section of the hard coat layer with a scanning transmission electron microscope (STEM) and image analysis.

[6] In the transfer film described in any one of [1] to [5], the hard coat layer has a thickness of 4 $\mu$m or more and 30 $\mu$m or less.

[7] In the transfer film described in any one of [1] to [6], absorption intensity $A_{1520}$ at 1,520 cm$^{-1}$ and absorption intensity $A_{1720}$ at 1,720 cm$^{-1}$ in an infrared absorption spectrum of the hard coat layer measured by an ATR measurement method with an infrared spectrophotometer satisfy relational expression (1): $A_{1520}/A_{1720} \leq 0.13$.

[8] In the transfer film described in any one of [1] to [7], one or both of the hard coat layer and the adhesive layer contain a weather resistance improver.

[9] In the transfer film described in [2] or [3], the primer layer contains a weather resistance improver.

[10] In the transfer film described in any one of [1] to [9], the transfer film is configured to dispose the hard coat layer on an exterior material.

[11] A hard coat film includes a second substrate and a hard coat layer, in which the hard coat layer has an elongation at 25°C of 10% or more and 60% or less, and in which letting a thickness of the hard coat layer expressed in units of $\mu$m be t, and letting the elongation of the hard coat layer expressed in units of % be E1, the value of t × E1/100 is 1.40 or more.

[12] In the hard coat film described in [11], the hard coat layer has a thickness of 6 $\mu$m or more and 30 $\mu$m or less.

[13] In the hard coat film described in [11] or [12], the value of t × E1/100 is 2.60 or more.

[14] In the hard coat film described in any one of [11] to [13], absorption intensity $A_{1520}$ at 1,520 cm$^{-1}$ and absorption intensity $A_{1720}$ at 1,720 cm$^{-1}$ in an infrared absorption spectrum of the hard coat layer measured by an ATR measurement method with an infrared spectrophotometer satisfy relational expression (1): $A_{1520}/A_{1720} \leq 0.13$.

[15] The hard coat film according to any one of [11] to [14] further includes an adhesive layer on a surface of the second substrate opposite to a surface of the second substrate adjacent to the hard coat layer.

[16] The hard coat film described in any one of [11] to [15] further includes a primer layer between the second substrate and the hard coat layer.

[17] In the hard coat film described in any one of [11] to [16], the hard coat film is configured to dispose the hard coat layer on an exterior material.

[18] A hard-coated formed article includes a formed article and a surface protective film disposed over at least a partial region of a surface of the formed article, in which the surface protective film is the transfer layer of the transfer film described in any one of [1] to [10], or the hard coat film described in any one of [11] to [17], and the hard coat layer is included in a surface layer of the hard-coated formed article.

[19] In the hard-coated formed article described in [18], the formed article is a resin molded article.

[20] In the hard-coated formed article described in [18], the formed article is plastic glazing.

[21] A method for manufacturing a hard-coated formed article includes the steps of disposing the transfer film described in any one of [1] to [10] on a formed article in such a manner that the adhesive layer in the transfer film is in contact with a surface of the formed article, and peeling the first substrate in the transfer film.

[22] A method for manufacturing a hard-coated formed article includes a step of disposing the hard coat film described in any one of [11] to [17] on a formed article.

EXAMPLES

Hereinafter, the present disclosure will be described more specifically based on examples. These descriptions do not limit the present disclosure in any way. In the following description, "part(s)" means "part(s) by mass".

[Preparation Example 1]

A curable composition (1) was prepared by mixing 50 parts of "NK Ester A-DPH" (available from Shin-Nakamura Chemical Co., Ltd.) as a curable component and 50 parts of methyl ethyl ketone as an organic solvent.

[Preparation Examples 2 to 21]

Curable compositions (2) to (21) were prepared in the same manner as in Preparation Example 1, except that the composition other than the organic solvent was changed as given in Tables 1 to 3. For example, 72 parts of "NK Ester A9300-1CL" (available from Shin-Nakamura Chemical Co., Ltd.) and 18 parts of "Shikoh (registered trademark) UT-5670"(available from Mitsubishi Chemical Corporation) as curable components, 25 parts (10 parts of silica) of "Silica ELCON V8803-25" (available from JGC Catalysts and Chemicals Ltd.) as inorganic particles, and 85 parts of methyl ethyl ketone as an organic solvent were mixed to prepare a curable composition (6).

The components used in the preparation examples are described below.

<Curable Component>

A-DPH: NK Ester A-DPH
(dipentaerythritol polyacrylate, available from Shin-Nakamura Chemical Co., Ltd.)

A-DPH-6E: NK Ester A-DPH-6E
(EO-modified dipentaerythritol polyacrylate, Shin-Nakamura Chemical Co., Ltd.)

A-DPH-6P: NK Ester A-DPH-6P
(PO-modified dipentaerythritol polyacrylate, Shin-Nakamura Chemical Co., Ltd.)

UA (1): urethane acrylate, a reaction product of pentaerythritol triacrylate and isophorone diisocyanate, synthetic product

UA (2): urethane acrylate, a reaction product of pentaerythritol triacrylate and hexamethylene diisocyanate, synthetic product

A-9300: NK Ester A9300
(Tris(2-acryloxyethyl) isocyanurate, available from Shin-Nakamura Chemical Co., Ltd.)

A9300-1CL: NK Ester A9300-1CL
(CL-modified tris(2-acryloxyethyl) isocyanurate, Shin-Nakamura Chemical Co., Ltd.)

A9300-3CL: NK Ester A9300-3CL
(CL-modified tris(2-acryloxyethyl) isocyanurate, Shin-Nakamura Chemical Co., Ltd.)

DPCA-120: Kayalad (registered trademark) DPCA-120
(CL-modified dipentaerythritol hexaacrylate, available from Nippon Kayaku Co., Ltd.)

UV-7550B: Shikoh (registered trademark) UV-7550B (Mitsubishi Chemical Corporation)

UA (3): Urethane acrylate, a reaction product of polyisocyanate having an isocyanurate ring derived from hexamethylene diisocyanate and CL (1 mol)-modified hydroxyethyl acrylate, synthetic product

UA (4): Urethane acrylate, a reaction product of polyisocyanate having an isocyanurate ring derived from hexamethylene diisocyanate and CL (2 mol)- modified hydroxyethyl acrylate, synthetic product

UT-5670: Shikoh (registered trademark) UT-5670 (Mitsubishi Chemical Corporation)

[Synthesis Example of UA (3)]

To a four-necked flask equipped with a stirrer, an air inlet tube, and a thermometer, 197.3 g of polyisocyanate (trade name: Coronate HXLV, penta- or higher multimer: 26.2% by mass, weight-average molecular weight: 1090) having an isocyanurate ring derived from hexamethylene diisocyanate, 252.7 g of caprolactone-modified 2-hydroxyethyl acrylate (trade name: Placcel FA1, Daicel Corporation), 0.27 g of p-methoxyphenol, 1.44 g of dibutylhydroxytoluene, and 111.0 g of toluene were added. The resulting mixture was stirred and heated to 60°C. Here, the equivalent ratio of isocyanate group/hydroxy group was 1.0. After the internal temperature was stabilized at 60°C, 1.63 g of a 10-fold dilution of dioctyltin dineodecanoate in toluene was added. After the heat generation due to the addition of dioctyltin dineodecanoate was stabilized, the temperature was maintained at 90°C, and the reaction was performed for 4 hours. Then the isocyanate group content was verified to be 0.1% or less by a method specified in JIS K7301. Thereby, 552.6 g of urethane acrylate was formed. The weight-average molecular weight of the resulting urethane acrylate was 2,940.

<Inorganic Particles>

· Inorganic particles: Silica ELCON V8803-25 (solid content: 40%, maximum particle size: 25 nm, solvent: methyl isobutyl ketone, reactive modified silica, 2 to 20 silica particles having an average primary particle size of 10 nm or more and 100 nm or less are connected and aggregated, and the reactive group is ethylenically unsaturated bond-containing group, available from JGC Catalysts and Chemicals Ltd.)

[Examples and Comparative Examples: Production of Transfer Film]

Each of the curable compositions prepared in Preparation examples was applied, with a bar coater, to a release-treated surface of a 50-$\mu$m-thick PET film (A4100, available from Toyobo Co., Ltd.) subjected to release treatment, and then dried at 90°C for 1 minute to form a coating film. The coating film was irradiated with an electron beam at 5 Mrad to form a cured product layer (hard coat layer) of the curable composition. The thicknesses of the hard coat layers (HC layers) are given in Tables 1 to 3. When the amount of dry coating of the curable composition was 5 g/m$^2$, the thickness of the HC layer was 4.0 $\mu$m.

The following primer layer composition was applied to the hard coat layer with a bar coater and then dried at 90°C for 1 minute to form a primer layer (Pr layer) having a thickness of 4 $\mu$m.

The following adhesive layer composition was applied to the primer layer with a bar coater and then dried at 90°C for 1 minute to form an adhesive layer (heat-sealable layer (HS layer)) having a thickness of 3 $\mu$m .

<Primer Layer Composition>

· Polycarbonate-based urethane acrylic copolymer: 100 parts

· Benzotriazole UV absorber: 17 parts

· Hydroxyphenyltriazine-based UV absorber: 13 parts

· Light stabilizer: 8 parts

· Particles (silica particles, average particle size: 3 $\mu$m): 9 parts

· Curing agent (hexamethylene diisocyanate): 25 parts

<Adhesive Layer Composition>

· Poly(methyl methacrylate)

A transfer film was formed as described above. The transfer film includes the PET film as a first substrate and a transfer layer disposed on the PET film, the transfer layer including the hard coat layer (HC layer), the primer layer (Pr layer), and the adhesive layer (HS layer).

The resulting transfer film was bonded to a PET film (A4100, available from Toyobo Co., Ltd.) having a thickness of 50 μm with a heat laminating roll at 150°C in such a manner that the adhesive layer was in contact with the PET film. Thereafter, the PET film as the first material of the transfer film was peeled off to provide a test specimen (1). The layer structure of the test specimen (1) was PET film/HS layer/Pr layer/HC layer.

The resulting transfer film was bonded to a polycarbonate plate having a thickness of 2 mm (Carboglass (registered trademark) C110C, available from AGC Inc.) at 220°C with a heat laminating roll in such a manner that the adhesive layer was in contact with the polycarbonate plate. Thereafter, the PET film as the first substrate of the transfer film was peeled off to provide a test specimen (2). The layer structure of the test specimen (2) was PC plate/HS layer/Pr layer/HC layer.

[Evaluation]

<Tensile Test>

The test specimen (1) was cut into a size of 2.5 cm × 10 cm. The resulting sample was subjected to a tensile test using a tensile tester (AUTOGRAPH AG-X, available from Shimadzu Corporation) under the conditions of an initial chuck-to-chuck distance of 5 cm and a tensile speed of 50 mm/min. The chuck-to-chuck distance when cracking occurred in the HC layer was measured, and the elongation was determined from the following formula. The tensile test was performed at 25°C or 70°C.

Elongation (%) = {(chuck-to-chuck distance when cracking occurs in hard coat layer in tensile

test) - (initial chuck-to-chuck distance)}/(initial chuck-to-chuck distance) × 100

The 70°C elongation was measured in 10% increments. In Tables 1 to 3, when "15%" is described for the 70°C elongation, it means that no cracking occurred at an elongation of 10%, but cracking occurred at an elongation of 20%. The same applies to other cases.

In each of Examples and Comparative examples, a reference film was obtained in the same manner as described above, except that the Pr layer and the HS layer were not formed. The 25°C elongation of the reference film was measured. The 25°C elongation of the test specimen (1) and the 25°C elongation of the reference film exhibits a high correlation (coefficient of determination of 0.99 or more). Accordingly, it can be said that the elongation of the test specimen (1) is the elongation of the HC layer.

Only an HS layer, only a Pr layer, or an HS layer and a Pr layer were formed on the PET film to provide a laminated film. When these laminated films were subjected to the tensile test, the PET film was broken before the HS layer or the Pr layer was cracked.

<Weathering Test>

The test specimen (2) was subjected to an accelerated weathering test with a metal halide lamp (MWOM) using a Metal Weather Tester (available from Daipla Wintes Co., Ltd.). A process including irradiating the HC layer of the test specimen (2) with ultraviolet rays for 4 hours under the following irradiation conditions, allowing the test specimen (2) to stand for 4 hours under the following darkroom conditions, and then performing condensation for 4 hours under the following condensation conditions is defined as one cycle. One cycle is 12 hours. This process was performed for 100 cycles.

«Irradiation Conditions»

Illuminance: 90 mW/cm$^2$

Black panel temperature: 63°C, humidity: 70% RH

<<Dark Room Conditions>>

Black panel temperature: 70°C, humidity: 90% RH

<<Condensation Conditions>>

Black panel temperature: natural cooling from 70°C to 30°C, humidity: 98% RH

The appearance of the HC layer of the test specimen (2) was visually observed for each cycle. The test was stopped when cracking occurred in the HC layer, and the number of clear cycles in which cracking did not occur was recorded. When no crack occurred in the HC layer even after 100 cycles, the number of clear cycles was recorded as 100 cycles. When the number of clear cycles was 55 cycles or more, the sample passed the test.

Based on the 25°C elongation (E1) obtained from the tensile test, the data was plotted with the thickness (t) of the HC layer $\times$ 25°C elongation (E1)/100 on the horizontal axis and the number of clear cycles in the weathering test on the vertical axis (Fig. 7). When the coefficient of determination (R2) for the regression equation by the least squares method was calculated, a high value of 0.84 or more was obtained. An example in which the number of clear cycles was 100 cycles was excluded from this calculation because the number of clear cycles was the upper limit of the number of test cycles. In contrast, the coefficient of determination was as low as about 0.62 when the data was plotted with the 25°C elongation (E1) of the HC layer on the horizontal axis and the number of clear cycles in the weathering test on the vertical axis.

Here, in an example in which t $\times$ E1/100 is 1.40 or more, the number of clear cycles is 55 cycles or more. Therefore, it was found that when t $\times$ E1/100 was 1.40 or more, superior weather resistance was provided.

In the weathering test, the gloss value of the HC layer of the test specimen (2) was measured for each cycle. The number of cycles immediately before the gloss value of the test specimen (2) became 80% or less from the initial value was recorded as the number of clear cycles of the example evaluation item "weather resistance (appearance)". The gloss was measured at an angle of 60° with a gloss meter VG2000 (manufactured by Nippon Denshoku Industries Co., Ltd.).

<Evaluation of Abrasion Resistance>

The resulting test specimen (2) was cut into a size of 10 cm $\times$ 10 cm. The resulting sample was subjected to a Taber abrasion test in accordance with JIS K7204 under the following conditions: abrasion wheel CS-10F, load: 500 g, number of rotations: 500, and rotation speed: 60 rpm. In accordance with JIS K7136, a difference in haze $\Delta$Hz (%) of the HC layer before and after the test was measured using a haze meter (HM-150, available from Murakami Color Research Laboratory). A $\Delta$Hz of 10% or less was regarded as acceptable.

<Evaluation of Chemical Resistance>

On the surface of the HC layer of the resulting test specimen (2), 8 to 10 drops of gasoline were dropped to a 1 cm square Bemcot using a dropper, covered with a cover to prevent evaporation of the solvent, and allowed to stand for 24 hours. The surface of the HC layer was visually observed.

AA: No change.

BB: Slight cracking occurred.

CC: Large cracks occurred.

<Measurement of Indentation Hardness>

The indentation hardness of each layer, such as the HC layer, of the resulting test specimen (2) was measured. Specifically, each test specimen (2) was cut with a microtome to form a cut surface of the test specimen (2). The indentation hardness of each layer, such as the HC layer, was measured by pressing an indenter (Berkovich indenter TI-0039) made of a diamond tip having a triangular pyramid tip into the cut surface (side surface) of each layer, such as the HC layer, in the vertical direction under the following conditions using a nanoindentation apparatus (trade name: TriboIndenter TI950, available from HYSITRON Inc., USA) by a load control system (maximum load: 50 $\mu$N) and measuring a load-displacement curve.

· Measurement temperature: 23°C

· Relative humidity: 70%

· Pressing load: 50 μN

· Time to reach indentation depth: 10 seconds

· Load holding time: 5 seconds

· Unloading time from indentation depth: 10 seconds

The indentation hardness of the HC layer was 380 MPa in Comparative Example 1, 240 MPa in Example 5, and 118 MPa in Example 9. The indentation hardness of each layer was 220 MPa for the HC layer, 30 MPa for the Pr layer, and 260 MPa for the HS layer in Example 2.

<Measurement of Area Fraction of Particles in HC Layer>

The area fraction of particles was measured for the HC layer of the resulting test specimen (2) by the measurement method described above. The area fraction of particles was 11% in Example 1, 23% in Example 10, and 51% in Example 11.

<Measurement of Infrared Absorption Spectrum>

The infrared absorption spectrum (IR spectrum) of the HC layer of the resulting test specimen (2) was measured by the measurement method described above. In the tables, IR urethane (1520)/ester (1720) means $A_{1520}/A_{1720}$.
Tables 1 to 3 collectively present the evaluation results.

[Table 1]

Table 1

| Comparative | Comparative example 1 | Comparative example 2 | Comparative example 3 | Comparative example 4 | Comparative example 5 | Example 12 | Example 1 | Example 13 | Example 14 | Example 15 | Example 16 | Example 2 |
|---|---|---|---|---|---|---|---|---|---|---|---|---|
| Curable composition | (1) | (2) | (3) | (4) | (5) | (6) | (6) | (6) | (6) | (6) | (7) | (7) |
| Curable component type | A-DPH | UA(1) | UA(2) | A-DPH-6E | A-DPH-6P | A9300 -1CL | A9300 -1CL | A9300 -1CL | A9300 -1CL | A9300 -1CL | A9300 -1CL | A9300 -1CL |
| Polymerizable double bond equivalent (mmol/g) | 11.5 | 7.4 | 7.0 | 7.6 | 6.9 | 5.6 | 5.6 | 5.6 | 5.6 | 5.6 | 5.6 | 5.6 |
| Parts by mass | 100 | 100 | 100 | 100 | 100 | 72 | 72 | 72 | 72 | 72 | 90 | 90 |
| Curable component type | | | | | | UT-5670 | UT-5670 | UT-5670 | UT-5670 | UT-5670 | | |
| Polymerizable double bond equivalent (mmol/g) | | | | | | | | | | | | |
| Parts by mass | | | | | | 18 | 18 | 18 | 18 | 18 | | |
| Inorganic particles parts by mass | | | | | | 10 | to | to | 10 | 10 | 10 | 10 |
| HC layer thickness (μm) | 4.0 | 4.0 | 4.0 | 4.0 | 4.0 | 17.0 | 12.0 | 10.0 | 8.0 | 6.0 | 17.0 | 12.0 |
| 25°C Elongation PET/HC | 3% | 4% | 4% | 7% | 8% | 14% | 16% | 20% | 24% | 25% | 21% | 23% |
| 25°C Elongation PET/HS/Pr/HC | 5% | 4% | 4% | 9% | 10% | 14% | 17% | 20% | 25% | 26% | 21% | 25% |

EP 4 316 772 A1

(continued)

| Comparative | Comparative example 1 | Comparative example 2 | Comparative example 3 | Comparative example 4 | Comparative example 5 | Example 12 | Example 1 | Example 13 | Example 14 | Example 15 | Example 16 | Example 2 |
|---|---|---|---|---|---|---|---|---|---|---|---|---|
| 70°C Elongation PET/HS/Pr/HC | 15% | - | - | 25% | - | 15% | 15% | 20% | 25% | 25% | 20% | 25% |
| 25°C Elongation × thickness ($\mu$m) | 0.20 | 0.16 | 0.16 | 0.36 | 0.40 | 2.38 | 2.04 | 2.00 | 2.00 | 1.56 | 3.57 | 3.00 |
| 70°C Elongation × thickness ($\mu$m) | 0.60 | - | - | 1.00 | - | 2.55 | 1.80 | 2.00 | 2.00 | 1.50 | 3.40 | 3.00 |
| Weather resistance Number of clear cycles (crack) | 5 | 5 | 5 | 30 | 30 | 100 | 83 | 66 | 66 | 55 | 100 | 100 |
| Weather resistance Number of clear cycles (appearance) | 5 | 5 | 5 | 30 | 30 | 83 | 83 | 60 | 60 | 55 | 100 | 100 |
| Abrasion resistance AH z (%) | 4 | 5 | 5 | 6 | 5 | 4 | 4 | 4 | 4 | 4 | 5 | 5 |
| Chemical resistance | AA | AA | AA | AA | AA | AA | AA | AA | AA | AA | AA | AA |
| IR urethane (1520)/ester (1720) | 0.00 | 0.15 | 0.15 | 0.00 | 0.00 | 0.07 | 0.07 | 0.07 | 0.07 | 0.07 | 0.03 | 0.03 |

[Table 2]

Table 2

| | Example 17 | Example 18 | Example 19 | Comparative example 6 | Comparative example 7 | Comparative example 8 | Example 3 | Example 4 | Example 20 | Example 21 | Example 5 | Example 25 |
|---|---|---|---|---|---|---|---|---|---|---|---|---|
| Curable composition | (7) | (7) | (7) | (8) | (6) | (9) | (7) | (10) | (10) | (10) | (11) | (11) |
| Curable component type | A9300 -1CL | A9300 -1CL | A9300 -1CL | A9300 | A9300 -1CL | DPCA-120 | A9300 -1CL | A9300 -1CL | A9300 -1CL | A9300 -1CL | A9300 -1CL | A9300 -1CL |
| Polymerizable double bond equivalent (mmol/g) | 5.6 | 5.6 | 5.6 | 7.1 | 5.6 | 3.1 | 5.6 | 5.6 | 5.6 | 5.6 | 5.6 | 5.6 |
| Parts by mass | 90 | 90 | 90 | 100 | 72 | 100 | 90 | 90 | 90 | 90 | 100 | 100 |
| Curable component type | | | | | UT-5670 | | | UA(3) | UA(3) | UA(3) | | |
| Polymerizable double bond equivalent (mmol/g) | | | | | | | | 2~2.5 | 2~2.5 | 2~2.5 | | |
| Parts by mass | | | | | 18 | | | 10 | 10 | 10 | | |
| inorganic particles parts by mass | 10 | 10 | 10 | | to | | 10 | | | | | |
| HC layer thickness (μm) | 10.0 | 8.0 | 6.0 | 4.0 | 4.0 | 4.0 | 4.0 | 12.0 | 10.0 | 8.0 | 4.0 | 12.0 |
| 25°C Elongation PET/HC | 27% | 30% | 34% | 26% | 28% | 29% | 36% | 39% | 40% | 44% | 36% | 25% |
| 25°C Elongation PET/HS/Pr/HC | 27% | 30% | 34% | 27% | 30% | 34% | 37% | 40% | 40% | 44% | 41% | 25% |
| 70°C Elongation PET/HS/Pr/HC | 25% | 30% | 30% | - | 25% | - | 35% | 45% | 45% | 45% | 55% | 25% |

EP 4 316 772 A1

| | Example 17 | Example 18 | Example 19 | Comparative example 6 | Comparative example 7 | Comparative example 8 | Example 3 | Example 4 | Example 20 | Example 21 | Example 5 | Example 25 |
|---|---|---|---|---|---|---|---|---|---|---|---|---|
| 25°C Elongation × thickness (μm) | 2.70 | 2.40 | 2.04 | 1.08 | 1.20 | 1.36 | 1.48 | 4.80 | 4.00 | 3.52 | 1.64 | 3.00 |
| 70°C Elongation × thickness (μm) | 2.50 | 2.40 | 1.80 | - | 1.00 | - | 1.40 | 5.40 | 4.50 | 3.60 | 2.20 | 3.00 |
| Weather resistance Number of clear cycles (crack) | 100 | 100 | 90 | 53 | 40 | 44 | 77 | 100 | 100 | 100 | 71 | 100 |
| Weather resistance Number of clear cycles (appearance) | 100 | 100 | 90 | 53 | 40 | 44 | 77 | 100 | 90 | 80 | 71 | 100 |
| Abrasion resistance △H z (%) | 5 | 5 | 5 | 8 | 4 | 10 | 5 | 5 | 5 | 5 | 9 | 9 |
| Chemical resistance | AA | AA | AA | AA | AA | BB | AA | AA | AA | AA | AA | AA |
| IR urethane (1520)/ester (1720) | 0.03 | 0.03 | 0.03 | 0.00 | 0.07 | 0.00 | 0.03 | 0.02 | 0.02 | 0.02 | 0.00 | 0.00 |

EP 4 316 772 A1

26

[Table 3]

[Table 3]

Table 3

| | Example 26 | Example 6 | Example 17 | Example 22 | Example 23 | Example 24 | Example 8 | Example 9 | Comparative example 9 | Example 10 | Comparative example 10 | Comparative example 11 |
|---|---|---|---|---|---|---|---|---|---|---|---|---|
| Curable composition | (11) | (12) | (10) | (19) | (20) | (21) | (13) | (14) | (15) | (16) | (17) | (18) |
| Curable component type | A9300 -1CL | A9300 -3CL | A9300 -1CL | A9300 -1CL | A9300 -1CL | A9300 -1CL | UV-7S508 | UA(3) | UA(4) | A9300 -1CL | A9300 -1CL | A9300 -1CL |
| Polymerizable double bond equivalent (mmol/g) | 5.6 | 3.9 | 5.6 | 5.6 | 5.6 | 5.6 | 2.3~-2.8 | 2~2.5 | 1.5~2 | 5.6 | 5.6 | 5.6 |
| Parts by mass | 100 | 100 | 90 | 65 | 50 | 25 | 100 | 100 | 100 | 90 | 80 | 60 |
| Curable component type | | | UA(3) | UA(3) | UA(3) | UA(3) | | | | | | |
| Polymerizable double bond equivalent (mmol/g) | | | 2~2.5 | 2~2.5 | 2~2.5 | 2~2.5 | | | | | | |
| Parts by mass | | | 10 | 35 | 50 | 75 | | | | | | |
| Inorganic particles parts by mass | | | | | | | | | | 10 | 20 | 40 |
| HC layer thickness ($\mu$m) | 8.0 | 4.0 | 4.0 | 6.0 | 4.0 | 4.0 | 4.0 | 4.0 | 4.0 | 4.0 | 4.0 | 4.0 |
| 25°C Elongation PET/He | 28% | 42% | 45% | 49% | 51% | 53% | 49% | 57% | 65% | 36% | 33% | 15% |
| 25°C Elongation PET/HS/Pr/HC | 28% | 44% | 46% | 49% | 51% | 53% | 50% | 60% | 72% | 36% | 33% | 15% |
| 70°C Elongation PET/HS/Pr/HC | 25% | - | 65% | 45% | 50% | 50% | - | 55% | 45% | 35% | - | - |

(continued)

| | Example 26 | Example 6 | Example 17 | Example 22 | Example 23 | Example 24 | Example 8 | Example 9 | Comparative example 9 | Example 10 | Comparative example 10 | Comparative example 11 |
|---|---|---|---|---|---|---|---|---|---|---|---|---|
| 25°C Elongation × thickness (μm) | 2.24 | 1.76 | 1.84 | 2.94 | 2.04 | 2.12 | 2.00 | 2.40 | 2.88 | 1.44 | 1.32 | 0.62 |
| 70°C Elongation × thickness (μm) | 2.00 | - | 2.60 | 2.70 | 2.00 | 2.00 | - | 2.20 | 1.80 | 1.40 | - | - |
| Weather resistance Number of clear cycles (crack) | 100 | 94 | 100 | 100 | 100 | 100 | 57 | 94 | 94 | 64 | 50 | 30 |
| Weather resistance Number of clear cycles (appearance) | 64 | 94 | 70 | 58 | 64 | 64 | 50 | 49 | 50 | 64 | 50 | 30 |
| Abrasion resistance ΔH z (%) | 9 | 10 | 5 | 5 | 4 | 5 | 10 | 6 | 13 | 8 | 7 | 6 |
| Chemical resistance | AA | AA | AA | AA | AA | BB | AA | BB | CC | AA | AA | AA |
| IR urethane (1520)/ester (1720) | 0.00 | 0.00 | 0.02 | 0.10 | 0.16 | 0.30 | 0.43 | 0.40 | 0.31 | 0.03 | 0.03 | 0.03 |

As will be understood by those skilled in the art, the transfer film and the like of the present disclosure are not limited by the description of the above examples, and the above examples and the specification are merely for explaining the principle of the present disclosure, and various modifications or improvements can be made without departing from the gist and scope of the present disclosure, and all of these modifications or improvements are included in the scope of the present disclosure claimed for protection. In addition, the scope of protection claimed by the present disclosure includes not only the scope of claims but also equivalents thereof.

Reference Signs List

1 transfer film
2 hard coat film
3 hard-coated formed article
4 hard-coated formed article
10 first substrate or second substrate
20 transfer layer
22 hard coat layer
23 primer layer
24 adhesive layer
30 transfer-receiving article or adherend (formed article)

**Claims**

1. A transfer film, comprising a first substrate and a transfer layer,

   wherein the transfer layer includes a hard coat layer and an adhesive layer in that order from a first substrate side, the hard coat layer has an elongation at 25°C of 10% or more and 60% or less, and
   wherein letting a thickness of the hard coat layer expressed in units of $\mu$m be t, and letting the elongation of the hard coat layer expressed in units of % be E1, a value of $t \times E1/100$ is 1.40 or more.

2. The transfer film according to claim 1, further comprising a primer layer between the hard coat layer and the adhesive layer.

3. The transfer film according to claim 2, wherein a hardness of the hard coat layer is higher than a hardness of the primer layer, and a hardness of the adhesive layer is higher than the hardness of the primer layer, wherein the hardness is an indentation hardness measured using a nanoindentation tester on a cross section of each layer.

4. The transfer film according to any one of claims 1 to 3, wherein a difference in haze ($\Delta$Hz) before and after a Taber abrasion test (abrasion wheel: CS-10F, load: 500 g, the number of rotations: 500, and rotation speed: 60 rpm) of the hard coat layer is 10% or less.

5. The transfer film according to any one of claims 1 to 4, wherein the hard coat layer contains particles having an average primary particle size of 10 nm or more and 1,000 nm or less, and an area fraction of the particles is 22% or less, the area fraction being measured by observation of a thin section of the hard coat layer with a scanning transmission electron microscope (STEM) and image analysis.

6. The transfer film according to any one of claims 1 to 5, wherein the hard coat layer has a thickness of 4 $\mu$m or more and 30 $\mu$m or less.

7. The transfer film according to any one of claims 1 to 6, wherein absorption intensity $A_{1520}$ at 1,520 cm$^{-1}$ and absorption intensity $A_{1720}$ at 1,720 cm$^{-1}$ in an infrared absorption spectrum of the hard coat layer measured by an ATR measurement method with an infrared spectrophotometer satisfy relational expression (1): $A_{1520}/A_{1720} \leq 0.13$.

8. The transfer film according to any one of claims 1 to 7, wherein one or both of the hard coat layer and the adhesive layer contain a weather resistance improver.

9. The transfer film according to claim 2 or 3, wherein the primer layer contains a weather resistance improver.

10. The transfer film according to any one of claims 1 to 9, wherein the transfer film is configured to dispose the hard coat layer on an exterior material.

11. A hard coat film, comprising a second substrate and a hard coat layer,

   wherein the hard coat layer has an elongation at 25°C of 10% or more and 60% or less, and
   wherein letting a thickness of the hard coat layer expressed in units of $\mu$m be t, and letting the elongation of the hard coat layer expressed in units of % be E1, a value of t $\times$ E1/100 is 1.40 or more.

12. The hard coat film according to claim 11, wherein the hard coat layer has a thickness of 6 $\mu$m or more and 30 $\mu$m or less.

13. The hard coat film according to claim 11 or 12, wherein the value of t $\times$ E1/100 is 2.60 or more.

14. The hard coat film according to any one of claims 11 to 13, wherein absorption intensity $A_{1520}$ at 1,520 cm$^{-1}$ and absorption intensity $A_{1720}$ at 1,720 cm$^{-1}$ in an infrared absorption spectrum of the hard coat layer measured by an ATR measurement method with an infrared spectrophotometer satisfy relational expression (1): $A_{1520}/A_{1720} \leq 0.13$.

15. The hard coat film according to any one of claims 11 to 14, further comprising an adhesive layer on a surface of the second substrate opposite to a surface of the second substrate adjacent to the hard coat layer.

16. The hard coat film according to any one of claims 11 to 15, further comprising a primer layer between the second substrate and the hard coat layer.

17. The hard coat film according to any one of claims 11 to 16, wherein the hard coat film is configured to dispose the hard coat layer on an exterior material.

18. A hard-coated formed article, comprising a formed article and a surface protective film disposed over at least a partial region of a surface of the formed article,

   wherein the surface protective film is
   the transfer layer of the transfer film according to any one of claims 1 to 10, or
   the hard coat film according to any one of claims 11 to 17, and
   the hard coat layer is included in a surface layer of the hard-coated formed article.

19. The hard-coated formed article according to claim 18, wherein the formed article is a resin molded article.

20. The hard-coated formed article according to claim 18, wherein the formed article is plastic glazing.

21. A method for manufacturing a hard-coated formed article, comprising the steps of:

   disposing the transfer film according to any one of claims 1 to 10 on a formed article in such a manner that the adhesive layer in the transfer film is in contact with a surface of the formed article; and
   peeling the first substrate in the transfer film.

22. A method for manufacturing a hard-coated formed article, comprising a step of disposing the hard coat film according to any one of claims 11 to 17 on a formed article.

FIG. 1

FIG. 2

FIG. 3

FIG. 4

FIG. 5

FIG. 6

THICKNESS × 25°C ELONGATION

FIG. 7

## INTERNATIONAL SEARCH REPORT

| International application No. |
| --- |
| **PCT/JP2022/016043** |

**A.  CLASSIFICATION OF SUBJECT MATTER**

*B29C 45/14*(2006.01)i; *B32B 27/18*(2006.01)i; *B32B 27/20*(2006.01)i; *B32B 7/022*(2019.01)i; *B32B 7/06*(2019.01)i
FI:    B32B7/06; B32B7/022; B32B27/20 Z; B32B27/18 A; B29C45/14

According to International Patent Classification (IPC) or to both national classification and IPC

**B.  FIELDS SEARCHED**

Minimum documentation searched (classification system followed by classification symbols)

B32B1/00 - 43/00, B29C45/00 - 45/24, B29C45/46 - 45/63, B29C45/70 - 45/72, B29C45/74 - 45/84, C09D1/00 - 10/00, C09D101/00 - 201/10, C09J1/00 - 5/10, C09J9/00 - 201/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2019-093686 A (TORAY ADVANCED FILM COMPANY, LIMITED) 20 June 2019 (2019-06-20)<br>claims, paragraphs [0071], [0079], [0086], [0106], [0119], [0127], [0147], [0149]-[0150], examples | 1-22 |
| X | JP 2020-193256 A (DAINIPPON PRINTING COMPANY, LIMITED) 03 December 2020 (2020-12-03)<br>claims, paragraphs [0061], [0072]-[0073], [0076], [0093]-[0094], [0110], [0125]-[0126], examples | 1-22 |
| X | JP 2019-112484 A (TOYO INK SC HOLDINGS COMPANY, LIMITED) 11 July 2019 (2019-07-11)<br>claims, paragraphs [0104], [0142]-[0143], [0164]-[0167], [0171], [0181], examples | 1-22 |
| A | JP 2010-126617 A (LINTEC CORPORATION) 10 June 2010 (2010-06-10)<br>entire text | 1-22 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 June 2022** | **28 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| PCT/JP2022/016043 |

**C. DOCUMENTS CONSIDERED TO BE RELEVANT**

| Category* | Citation of document, with indication, where appropriate, of the relevant passages | Relevant to claim No. |
|---|---|---|
| A | WO 2016/194957 A1 (MITSUBISHI PLASTICS, INCORPORATED) 08 December 2016 (2016-12-08)<br>entire text | 1-22 |
| A | JP 2019-001972 A (DNP FINE CHEMICALS COMPANY, LIMITED) 10 January 2019 (2019-01-10)<br>entire text | 1-22 |
| A | WO 2014/024932 A1 (ASAHI GLASS COMPANY, LIMITED) 13 February 2014 (2014-02-13)<br>entire text | 1-22 |
| A | WO 2019/182009 A1 (LINTEC CORPORATION) 26 September 2019 (2019-09-26)<br>entire text | 1-22 |
| A | US 2008/0075951 A1 (3M INNOVATIVE PROPERTIES COMPANY) 27 March 2008 (2008-03-27)<br>whole document | 1-22 |
| A | WO 2009/029438 A1 (3M INNOVATIVE PROPERTIES COMPANY) 05 March 2009 (2009-03-05)<br>whole document | 1-22 |

Form PCT/ISA/210 (second sheet) (January 2015)

**INTERNATIONAL SEARCH REPORT**
Information on patent family members

International application No.

**PCT/JP2022/016043**

| Patent document cited in search report | | | Publication date (day/month/year) | Patent family member(s) | | | Publication date (day/month/year) |
|---|---|---|---|---|---|---|---|
| JP | 2019-093686 | A | 20 June 2019 | (Family: none) | | | |
| JP | 2020-193256 | A | 03 December 2020 | (Family: none) | | | |
| JP | 2019-112484 | A | 11 July 2019 | (Family: none) | | | |
| JP | 2010-126617 | A | 10 June 2010 | (Family: none) | | | |
| WO | 2016/194957 | A1 | 08 December 2016 | CN whole document KR whole document | 107709493 10-2018-0015716 | A A | |
| JP | 2019-001972 | A | 10 January 2019 | (Family: none) | | | |
| WO | 2014/024932 | A1 | 13 February 2014 | US whole document | 2015/0152004 | A1 | |
| WO | 2019/182009 | A1 | 26 September 2019 | CN whole document KR whole document | 111466015 10-2020-0135279 | A A | |
| US | 2008/0075951 | A1 | 27 March 2008 | WO whole document | 2008/039680 | A1 | |
| WO | 2009/029438 | A1 | 05 March 2009 | US whole document TW whole document | 2011/0086221 200920802 | A1 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5601189 B
- JP 6100653 A
- JP 10001524 A